# EUROPEAN PATENT APPLICATION

(11) **EP 4 672 716 A1**
(43) Date of publication of application: **31.12.2025**
(21) Application number: 23927233.9
(22) Date of filing: 25.12.2023
(51) Int. Cl.: H04L 67/1004

(54) **LOAD BALANCING METHOD, APPARATUS, DEVICE, STORAGE MEDIUM AND COMPUTER PROGRAM**

(30) Priority: 15.03.2023 CN 202310250621
(71) Applicant: Huawei Cloud Computing Technologies Co., Ltd., Guiyang, Guizhou 550025 (CN)
(72) Inventor: ZHU, Xiaoping, Guiyang, Guizhou 550025 (CN)
(74) Representative: Isarpatent
(86) International application number: PCT/CN2023/141405
(87) International publication number: WO 2024/187893

(57) **Abstract**

This application discloses a load balancing method, an apparatus, a device, a storage medium, and a computer program, and belongs to the field of communication technologies. The method includes: A load balancing node sends a detection packet to each of a plurality of backend servers, receives a reply packet sent by a part or all of the plurality of backend servers, determines a health detection result and a load detection result of each of the plurality of backend servers based on the received reply packet, and schedules service traffic based on the health detection results and the load detection results of the plurality of backend servers. In this application, the health detection result and the load detection result of each of the plurality of backend servers are determined, and the service traffic is scheduled based on the health detection results and the load detection results of the plurality of backend servers. This can avoid an overload of the backend server, to avoid a crash of the backend server, thereby effectively ensuring efficiency of processing the service traffic.

## Description

This application claims priority to Chinese Patent Application No. 202310250621.4, filed on March 15, 2023 and entitled "LOAD BALANCING METHOD, APPARATUS, DEVICE, STORAGE MEDIUM, AND COMPUTER PROGRAM", which is incorporated herein by reference in its entirety.

### TECHNICAL FIELD

This application relates to the field of communication technologies, and in particular, to a load balancing method, an apparatus, a device, a storage medium, and a computer program.

### BACKGROUND

With continuous development of computer and internet technologies, a scale of service traffic and complexity of service logic also develop. To adapt to increasingly large service traffic and increasingly complex and diversified service logic, a plurality of backend servers are generally required to process service traffic, to improve a service processing capability and a service processing speed.

In a process of processing the service traffic, the service traffic is generally distributed to the plurality of backend servers using a load balancing method. To be specific, a load balancing node sends detection packets to the plurality of backend servers, determines, based on statuses of replies of the plurality of backend servers to the detection packets, whether a corresponding backend server is active, and then distributes the service traffic to an active backend server according to a traffic scheduling algorithm.

However, when the service traffic is distributed using the foregoing method, a backend server may crash. As a result, efficiency of processing the service traffic is affected.

### SUMMARY

This application provides a load balancing method, an apparatus, a device, a storage medium, and a computer program, to resolve a crash of a backend server in a related technology. The technical solutions are as follows.

According to a first aspect, a load balancing method is provided, applied to a load balancing node included in a cloud platform. The load balancing node distributes service traffic to a plurality of backend servers according to a load balancing strategy. The method includes: The load balancing node sends a detection packet to each of the plurality of backend servers, where the detection packet indicates the backend server to detect a health status and a load status of the backend server; the load balancing node receives a reply packet sent by a part or all of the plurality of backend servers, where the reply packet includes a health status and a load status of a corresponding backend server; the load balancing node determines a health detection result and a load detection result of each of the plurality of backend servers based on the received reply packet, where the health detection result indicates whether the corresponding backend server is in an active state, and the load detection result indicates whether the corresponding backend server is overloaded; the load balancing node determines, based on the health detection results and the load detection results of the plurality of backend servers, at least one backend server that is in the active state and is not overloaded in the plurality of backend servers; and the load balancing node schedules the service traffic based on a load detection result of each backend server in the at least one backend server.

The health detection result of the backend server can indicate whether the corresponding backend server is in the active state, and the load detection result can indicate whether the corresponding backend server is overloaded. Therefore, the health detection result and the load detection result of each of the plurality of backend servers are determined, and the service traffic is scheduled based on the health detection results and the load detection results of the plurality of backend servers. This can avoid an overload of the backend server, to avoid a crash of the backend server, thereby effectively ensuring efficiency of processing the service traffic.

When indicating the backend server to detect the health status of the backend server, the detection packet can also indicate the backend server to detect the load status of the backend server. Therefore, the detection packet does not need to be sent a plurality of times, and the detection packet needs only to be sent once to indicate the backend server to detect the health status and the load status of the backend server. In this way, a step of obtaining the health status and the load status of the backend server can be effectively simplified, to improve working efficiency of the backend server and the load balancing node.

Optionally, the detection packet is an internet control message protocol (internet control message protocol, ICMP) packet. The ICMP packet includes a detection type field and a load indicator field. The detection type field indicates that the ICMP packet is used to detect the health status and the load status. The load indicator field indicates a measurement indicator of the load status.

Optionally, before the load balancing node sends the detection packet to each of the plurality of backend servers, the load balancing node further generates the detection packet using a health detection script. In other words, the load balancing node loads the health detection script. In this case, the load balancing node can generate the detection packet using the health detection script.

Optionally, before the load balancing node generates the detection packet using the health detection script, the load balancing node needs to obtain and load the health detection script. During actual application, the measurement indicator used to detect the load status of the backend server may be fixed, or may be adjusted based on different requirements. In other words, the measurement indicator may be fixed, or may dynamically change. When the measurement indicator is fixed, the health detection script used to generate the detection packet is also fixed. When the measurement indicator dynamically changes, the health detection script used to generate the detection packet also dynamically changes. Therefore, for the dynamically changing measurement indicator, different detection packets may be generated using different health detection scripts, to implement load detection based on different requirements, and avoid a change in implementation logic of the load balancing node. Only different health detection scripts need to be loaded for implementation. In different cases, the load balancing node obtains the health detection script in different manners.

When the measurement indicator of the load status remains unchanged, the load balancing node stores the health detection script, and the load balancing node can directly obtain the health detection script. Optionally, the cloud platform further includes a load balancing management node. The load balancing management node is configured to manage the load balancing node included in the cloud platform. In this case, the load balancing management node stores the health detection script. The load balancing management node can send the stored health detection script to the load balancing node. In this way, the load balancing node can obtain the health detection script sent by the load balancing management node. In other words, when the measurement indicator of the load status remains unchanged, the health detection script may be pre-stored in the load balancing node, or may be sent by the load balancing management node.

When the measurement indicator of the load status dynamically changes, the load balancing node obtains the health detection script in a plurality of implementations. The following describes two of the plurality of implementations.

In a first implementation, the load balancing node generates the health detection script based on at least one load indicator. The at least one load indicator is the measurement indicator of the load status.

In a second implementation, the load balancing management node generates the health detection script based on at least one load indicator, and then sends the health detection script to the load balancing node. The at least one load indicator is the measurement indicator of the load status.

Optionally, the load balancing management node can generate the health detection script based on the at least one load indicator, and send the health detection script to the load balancing node, and can further generate a backend server script based on the at least one load indicator, and send the backend server script to the backend server. Therefore, before the load balancing node generates the detection packet using the health detection script, the load balancing management node can receive the at least one load indicator sent by a client. The load balancing management node generates the health detection script and the backend server script based on the at least one load indicator. The backend server script is used to parse the detection packet and generate the reply packet. The load balancing management node sends the health detection script to the load balancing node, and sends the backend server script to the client, to indicate the client to load the backend server script to the plurality of backend servers.

The backend server script and the health detection script are generated and sent by the load balancing management node. Therefore, the backend server and the load balancing management node can save computing power, to effectively improve working efficiency of the backend server and the load balancing node.

The load balancing node parses the received reply packet based on the health detection script, and determines, based on a parsing result, a health detection result and a load detection result of each backend server that sends the reply packet.

During actual application, because a network link is faulty, a backend server is unreachable, or the like, the load balancing node cannot receive reply packets sent by some backend servers. In this case, the load balancing node can receive only the reply packet sent by the part of the backend servers. In addition, due to a network delay or the like, even if the load balancing node receives the reply packet sent by the backend server, the reply packet may also time out. Therefore, in different cases, the load balancing node determines, based on the received reply packet, the health detection result and the load detection result of each of the plurality of backend servers in different manners. The following sequentially describes the manners.

For each of the plurality of backend servers, if no reply packet sent by the backend server is received, or a reply packet sent by the backend server is received after timeout, the health detection result of the backend server is determined as inactive, and the load detection result is determined as null. If the reply packet sent by the backend server is received before timeout, and a detection result field in the reply packet indicates that a connection status of a target port is disconnected, the health detection result of the backend server is determined as inactive, and the load detection result is determined as null. If the reply packet sent by the backend server is received before timeout, and the detection result field in the reply packet indicates that the connection status of the target port is connected, the health detection result of the backend server is determined as active, and the load detection result is determined as a load status indicated by the detection result field in the reply packet.

A backend server whose health detection result is active in the plurality of backend servers is determined as a backend server in the active state, and the at least one backend server that is in the active state and is not overloaded in the plurality of backend servers is determined based on a load detection result of the backend server in the active state.

An implementation process of determining, based on the load detection result of the backend server in the active state, the at least one backend server that is in the active state and is not overloaded in the plurality of backend servers includes: determining, based on the load detection result of the backend server in the active state, a load weight of the at least one backend server in the active state in the plurality of backend servers, and determining, based on the load weight of the at least one backend server in the active state in the plurality of backend servers, the at least one backend server that is in the active state and is not overloaded in the plurality of backend servers.

For any backend server in the at least one backend server in the active state, at least one detection parameter may be determined based on a load detection result of the backend server, the at least one detection parameter is in a one-to-one correspondence with the at least one load indicator, and a load weight of the backend server is determined based on the at least one detection parameter. After each backend server in the active state is processed in the same manner, the load weight of the at least one backend server in the active state can be determined.

The load indicator includes memory usage, CPU usage, a number of running processes, system response time, and the like. Therefore, the load detection result includes a detection result corresponding to each load indicator in the at least one load indicator. Load indicators indicate load statuses of the backend server in different dimensions, to be specific, units of detection results corresponding to different load indicators are different. Therefore, load statuses of the backend server in different dimensions are converted into those in a same dimension, so that it can be more convenient to subsequently determine the load weight. In addition, because units of detection results corresponding to different load indicators are different, for different load indicators, detection results corresponding to the load indicators are converted in different manners. The following sequentially describes the manners.

When the load indicator is the memory usage, because a unit of a detection result corresponding to the memory usage is percentage (or rate), the detection result corresponding to the memory usage may be directly used as a detection parameter corresponding to the memory usage.

When the load indicator is the CPU usage, because a unit of a detection result corresponding to the CPU usage is percentage (or rate), the detection result corresponding to the CPU usage may be directly used as a detection parameter corresponding to the CPU usage.

When the load indicator is a TCP connection count, a value obtained by dividing a detection result corresponding to the TCP connection count by a maximum connection count is used as a detection parameter corresponding to the TCP connection count.

When the load indicator is the number of running processes, a value obtained by dividing a detection result corresponding to the number of running processes by a maximum number of processes is used as a detection parameter corresponding to the number of running processes.

When the load indicator is the system response time, if a detection result corresponding to the system response time is less than a response time threshold, a detection parameter corresponding to the system response time is determined as 0, or if the detection result corresponding to the system response time is greater than or equal to the response time threshold, a value obtained by subtracting the response time threshold from the detection result corresponding to the system response time and then dividing an obtained value by the response time threshold is used as the detection parameter corresponding to the system response time.

The maximum connection count is preset. Maximum connection counts corresponding to different backend servers may be the same or may be different. The maximum connection count is a maximum TCP connection count of connections that can be implemented by a corresponding backend server. The maximum number of processes is preset. Maximum numbers of processes corresponding to different backend servers may be the same or may be different. The maximum number of processes is a maximum number of processes that can be run by the corresponding backend server. The response time threshold is preset. Response time thresholds corresponding to different backend servers may be the same or may be different, and are related to performance of corresponding backend servers. Better performance of the backend server indicates a smaller response time threshold. Certainly, different backend servers may alternatively correspond to a same response time threshold. A load weight threshold is preset. In addition, in different cases, the load weight threshold may be further adjusted based on different requirements.

After the detection result corresponding to each load indicator in the at least one load indicator is converted, the at least one detection parameter can be obtained. In this case, a largest detection parameter in the at least one detection parameter may be used as the load weight of the backend server. Optionally, the load balancing node stores a correspondence between a load indicator and an indicator weight. The load balancing node can determine, from the correspondence between a load indicator and an indicator weight, an indicator weight corresponding to each detection parameter, and add values obtained by multiplying the at least one detection parameter by the corresponding indicator weights, to obtain the load weight of the backend server.

A backend server whose load weight is less than the load weight threshold in the at least one backend server in the active state is determined as at least one backend server that is in the active state and is not overloaded in the plurality of backend servers.

The load balancing node determines a load weight of each backend server in the at least one backend server based on the load detection result of the at least one backend server that is in the active state and is not overloaded in the plurality of backend servers. The load weight indicates a load status of the corresponding backend server. The load balancing node schedules the service traffic based on the load weight of the at least one backend server.

According to the foregoing descriptions, a traffic scheduling algorithm includes a round robin algorithm, a randomized algorithm, a weighted algorithm, a least connections algorithm, and the like. The foregoing plurality of traffic scheduling algorithms may be classified into two types, namely, a scheduling algorithm based on a scheduling weight and a scheduling algorithm not based on a scheduling weight. The method provided in this application can be combined with the foregoing scheduling algorithm. Different types of traffic scheduling algorithms are combined with this application in different manners. The following separately describes the manners.

A type of the traffic scheduling algorithm is the scheduling algorithm based on a scheduling weight. In this case, the load balancing node adjusts, based on a load weight of a first-type backend server in the at least one backend server that is in the active state and is not overloaded in the plurality of backend servers, a scheduling weight of the first-type backend server, to reduce a scheduling priority of the first-type backend server. The first-type backend server is a backend server whose load weight is greater than or equal to a load threshold. The scheduling weight indicates a scheduling priority of the corresponding backend server. The load balancing node schedules, according to the scheduling algorithm based on a scheduling weight, the service traffic based on a scheduling weight of a second-type backend server in the at least one backend server and an adjusted scheduling weight of the first-type backend server. The second-type backend server is a backend server whose load weight is less than the load threshold.

For each backend server in the first-type backend server, the load balancing node can multiply, by a scheduling weight of the backend server, a value obtained by subtracting a load weight of the backend server from 1, to obtain an adjusted scheduling weight of the backend server. Certainly, a difference between a value obtained by multiplying the load weight of the backend server by 100 and the scheduling weight of the backend server may alternatively be determined as the adjusted scheduling weight of the backend server.

It should be noted that the scheduling weight is preset, and is related to performance of a corresponding backend server.

A type of the traffic scheduling algorithm is the scheduling algorithm not based on a scheduling weight. In this case, the load balancing node selects a second-type backend server from the at least one backend server based on the load weight of the at least one backend server that is in the active state and is not overloaded in the plurality of backend servers. The second-type backend server is a backend server whose load weight is less than a load threshold. The load balancing node schedules the service traffic according to the scheduling algorithm not based on a scheduling weight based on the second-type backend server.

The load balancing method provided in this application is combined with the traffic scheduling algorithm. This can effectively resolve overloading of the backend server, to be specific, improve efficiency of processing the service traffic, without increasing additional hardware and software costs.

According to a second aspect, a load balancing method is provided, applied to a backend server. A load balancing node included in a cloud platform distributes service traffic to a plurality of backend servers according to a load balancing strategy. The method includes: The backend server receives a detection packet sent by the load balancing node, where the detection packet indicates the backend server to detect a health status and a load status of the backend server; the backend server determines the health status and the load status of the backend server based on the detection packet; the backend server generates a reply packet based on the health status and the load status of the backend server, where the reply packet includes the health status and the load status; and the backend server sends the reply packet to the load balancing node.

Optionally, the backend server determines, based on the detection packet, the health status and the load status of the backend server using a loaded backend server script; and generates, based on the health status and the load status of the backend server, the reply packet using the backend server script.

The backend server script can indicate the backend server to determine a connection status of a target port. The target port is a port used by the backend server to process the service traffic. The connection status of the target port can indicate whether the target port is connected or disconnected. In this case, the backend server determines the connection status of the target port by running the backend server script, and determines the health status of the backend server based on the connection status of the target port. If the target port is connected, it is determined that the health status of the backend server is healthy. If the target port is disconnected, it is determined that the health status of the backend server is unhealthy.

If the target port is connected, it indicates that the backend server can normally process the service traffic. Therefore, it may be determined that the health status of the backend server is healthy. If the target port is disconnected, it indicates that the backend server cannot normally process the service traffic. Therefore, it may be determined that the health status of the backend server is unhealthy. Certainly, the connection status of the target port may alternatively be directly determined as the health status of the backend server.

The backend server script can indicate the backend server to determine the load status of the backend server based on at least one load indicator indicated by a load indicator field of the detection packet. In this case, the backend server can determine the load status of the backend server by running the backend server script.

Before the backend server determines the health status and the load status of the backend server, the backend server needs to obtain and load the backend server script. Similarly, a measurement indicator used to detect the load status of the backend server may be fixed, or may be adjusted based on different requirements. In other words, the measurement indicator may be fixed, or may dynamically change. When the measurement indicator is fixed, the backend server script used to determine the load status of the backend server is also fixed. When the measurement indicator dynamically changes, the backend server script used to determine the load status of the backend server also dynamically changes. Therefore, for the dynamically changing measurement indicator, the load status of the backend server may be determined using different backend server scripts, to implement load detection based on different requirements, and avoid a change in implementation logic of the backend server. Only different backend servers scripts need to be loaded for implementation. In different cases, the backend server obtains the backend server script in different manners.

When the measurement indicator of the load status remains unchanged, the backend server stores the backend server script. In this case, the backend server can directly obtain and load the backend server script. Optionally, the cloud platform further includes a load balancing management node. The load balancing management node is configured to manage the load balancing node included in the cloud platform. In this case, the load balancing management node stores the backend server script. The load balancing management node can send the stored backend server script to a client, to indicate the client to load the backend server script to the plurality of backend servers. In this way, the backend server can obtain the backend server script sent by the load balancing management node. In other words, when the measurement indicator of the load status remains unchanged, the backend server script may be pre-stored in the backend server, or may be sent by the load balancing management node.

When the measurement indicator of the load status dynamically changes, the backend server obtains the backend server script in a plurality of implementations. The following describes two of the plurality of implementations. In a first implementation, the backend server generates the backend server script based on the at least one load indicator. The at least one load indicator is the measurement indicator of the load status. In a second implementation, the load balancing management node generates the backend server script based on the at least one load indicator, and then sends the backend server script to the client or the backend server. The at least one load indicator is the measurement indicator of the load status.

According to a third aspect, a cloud platform is provided. The cloud platform includes a load balancing node. The load balancing node is configured to implement the load balancing method according to the first aspect.

According to a fourth aspect, a backend server is provided. The backend server is configured to implement the load balancing method according to the second aspect.

According to a fifth aspect, a computing device cluster is provided. The computing device cluster includes at least one computing device. Each computing device includes a processor and a memory. The processor of the at least one computing device is configured to execute instructions stored in the memory of the at least one computing device, to enable the computing device cluster to perform the load balancing method according to the first aspect.

Optionally, each computing device may further include a communication bus. The communication bus is configured to establish a connection between the processor and the memory of each computing device.

According to a sixth aspect, a backend server is provided. The backend server includes a processor and a memory. The memory is configured to store a computer program for performing the load balancing method according to the second aspect. The processor is configured to execute the computer program stored in the memory, to implement the load balancing method according to the second aspect.

Optionally, the backend server may further include a communication bus. The communication bus is configured to establish a connection between the processor and the memory.

According to a seventh aspect, a computer-readable storage medium is provided. The storage medium stores instructions. When the instructions are run on a computing device cluster, the computing device cluster is enabled to perform a step of the load balancing method according to the first aspect.

According to an eighth aspect, a computer-readable storage medium is provided. The storage medium stores instructions. When the instructions are run on a backend server, the backend server is enabled to perform a step of the load balancing method according to the second aspect.

According to a ninth aspect, a computer program product including instructions is provided. When the instructions are run on a computing device cluster, the computing device cluster is enabled to perform a step of the load balancing method according to the first aspect.

According to a tenth aspect, a computer program product including instructions is provided. When the instructions are run on a backend server, the backend server is enabled to perform a step of the load balancing method according to the second aspect.

Technical effect obtained in the second aspect to the tenth aspect is similar to technical effect obtained by corresponding technical means in the first aspect. Details are not described herein again.

### BRIEF DESCRIPTION OF DRAWINGS

FIG. 1 is a diagram of a load balancing method according to an embodiment of this application;
FIG. 2 is a diagram of an implementation environment according to an embodiment of this application;
FIG. 3 is a flowchart of a load balancing method according to an embodiment of this application;
FIG. 4 is a diagram of an ICMP packet according to an embodiment of this application;
FIG. 5 is a diagram of a load indicator selection interface according to an embodiment of this application;
FIG. 6 is a flowchart of another load balancing method according to an embodiment of this application;
FIG. 7 is a diagram of an architecture of a cloud platform according to an embodiment of this application;
FIG. 8 is a diagram of a structure of a computer device according to an embodiment of this application;
FIG. 9 is a diagram of an architecture of a computing device cluster according to an embodiment of this application;
FIG. 10 is a diagram of a connection between computing devices according to an embodiment of this application;
FIG. 11 is a diagram of a structure of a load balancing node according to an embodiment of this application;
FIG. 12 is a diagram of a structure of a load balancing management node according to an embodiment of this application; and
FIG. 13 is a diagram of a structure of a backend server according to an embodiment of this application.

### DESCRIPTION OF EMBODIMENTS

To make objectives, technical solutions, and advantages of embodiments of this application clearer, the following further describes implementations of this application in detail with reference to the accompanying drawings.

For ease of understanding, before a load balancing method provided in embodiments of this application is described in detail, an application scenario and an implementation environment in embodiments of this application are first described.

With continuous development of computer and internet technologies, a scale of service traffic and complexity of service logic also develop. To adapt to increasingly large service traffic and increasingly complex and diversified service logic, a plurality of backend servers are generally required to process service traffic, to improve a service processing capability and a service processing speed.

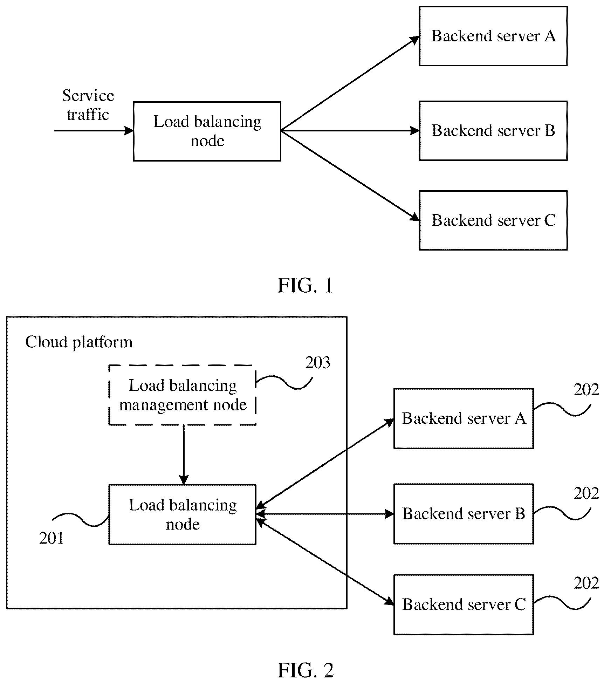

In a process of processing the service traffic, the service traffic is generally distributed to the plurality of backend servers using a load balancing method. To be specific, with reference to FIG. 1, a load balancing node sends detection packets to the plurality of backend servers, and determines, based on statuses of replies of the plurality of backend servers to the detection packets, whether a corresponding backend server is active. Then, after the service traffic is transmitted to the load balancing node through a network, the load balancing node can distribute the service traffic to an active backend server according to a traffic scheduling algorithm.

The traffic scheduling algorithm generally includes a round robin algorithm, a randomized algorithm, a weighted algorithm, a least connections algorithm, and the like. The round robin algorithm means that the service traffic is sequentially and alternately forwarded to the active backend server. The randomized algorithm means that the service traffic is randomly distributed to the active backend server. The weighted algorithm means that a corresponding scheduling weight is set for each backend server based on performance of the backend server, where a larger weight value is generally set for a backend server with good performance, and a smaller weight value is generally set for a backend server with poor performance, so that a backend server with a large weight can process more service traffic. The least connections algorithm means that the service traffic is distributed to a backend server with a smallest current connection count in active backend servers.

However, according to the foregoing method, only whether the backend server is active can be determined, but a load status of the backend server cannot be determined. When a load of the backend server is quite heavy, if the service traffic is still continuously distributed to the heavily loaded backend server, the backend server is overloaded. Finally, the backend server crashes. As a result, efficiency of processing the service traffic is affected. In view of this, embodiments of this application provide a load balancing method, to determine a health detection result and a load detection result of each of the plurality of backend servers, and schedule the service traffic based on the health detection results and the load detection results of the plurality of backend servers. The health detection result of the backend server can indicate whether the corresponding backend server is in the active state, and the load detection result can indicate whether the corresponding backend server is overloaded. Therefore, the health detection result and the load detection result of each of the plurality of backend servers are determined, and the service traffic is scheduled based on the health detection results and the load detection results of the plurality of backend servers. This can avoid an overload of the backend server, to avoid the crash of the backend server, thereby effectively ensuring efficiency of processing the service traffic.

FIG. 2 is a diagram of an implementation environment according to an embodiment of this application. The implementation environment includes a load balancing node 201 and a plurality of backend servers 202 (three backend servers are used as an example for description in FIG. 2). Optionally, the implementation environment further includes a load balancing management node 203. The load balancing node 201 and the load balancing management node 203 belong to a cloud platform. The load balancing node can distribute service traffic to the plurality of backend servers 202 according to a load balancing strategy. The load balancing management node 203 is configured to manage the load balancing node 201 included in the cloud platform.

The load balancing node 201 establishes a communication connection to the backend server 202, and the load balancing node 201 establishes a communication connection to the load balancing management node 203. The communication connection may be a wired connection or a wireless connection. This is not limited in embodiments of this application.

The load balancing node 201 sends a detection packet to each of the plurality of backend servers 202. The backend server 202 receives the detection packet sent by the load balancing node 201, determines a health status and a load status of the backend server 202 based on the detection packet, to obtain a health detection result and a load detection result, and then generates a reply packet based on the health detection result and the load detection result. The backend server 202 sends the reply packet to the load balancing node. The load balancing node 201 receives a reply packet sent by a part or all of the plurality of backend servers 202, determines a health detection result and a load detection result of each of the plurality of backend servers 202 based on the received reply packet, and then schedules the service traffic based on the health detection results and the load detection results of the plurality of backend servers 202.

Optionally, the implementation environment further includes a load balancing management node 203. In this case, a user who distributes the service traffic using the load balancing node may be referred to as a first user or tenant. The first user can determine at least one load indicator on a client, and send the at least one load indicator to the load balancing management node 203. The load balancing management node 203 can receive the at least one load indicator sent by the client, and generate a health detection script and a backend server script based on the at least one load indicator. The load balancing management node 203 sends the health detection script to the load balancing node 201, and sends the backend server script to the client, to indicate the client to load the backend server script to the plurality of backend servers 202. The load balancing node 201 can receive the health detection script, and generate the detection packet using the health detection script.

The backend server 202 may be an independent server, or may be a server cluster or a distributed system including a plurality of physical servers, or may be a cloud server that provides a basic cloud computing service like a cloud service, a cloud database, cloud computing, a cloud function, cloud storage, a network service, cloud communication, a middleware service, a domain name service, a security service, a content delivery network (Content Delivery Network, CDN), or a big data and artificial intelligence platform, or may be a cloud computing service center, or may be a virtual machine, a physical machine, a container, or the like. This is not limited in embodiments of this application.

The cloud platform may be a server cluster or a distributed system including a plurality of physical servers, or may be a cloud server that provides a basic cloud computing service like a cloud service, a cloud database, cloud computing, a cloud function, cloud storage, a network service, cloud communication, a middleware service, a domain name service, a security service, a content delivery network (content delivery network, CDN), or a big data and artificial intelligence platform, or may be a cloud computing service center.

It should be noted that the load balancing node 201 and the load balancing management node 203 may be a same node, or may be two different nodes. This is not limited in embodiments of this application. The plurality of backend servers 202, and the load balancing node 201 and the load balancing management node 203 may belong to a same cloud platform, or may belong to different cloud platforms. This is not limited in embodiments of this application.

Persons skilled in the art should understand that the load balancing node 201, the backend server 202, the load balancing management node 203, and the cloud platform are merely examples. Another existing or future load balancing node, backend server, load balancing management node, and cloud platform, if applicable to embodiments of this application, should also fall within the protection scope of embodiments of this application, and be included herein by reference.

It should be noted that the application scenario and the implementation environment that are described in embodiments of this application are intended to describe the technical solutions in embodiments of this application more clearly, and do not constitute a limitation on the technical solutions provided in embodiments of this application. Persons of ordinary skill in the art may be aware that, as a technology evolves and a new application scenario emerges, the technical solutions provided in embodiments of this application are also applicable to a similar technical problem.

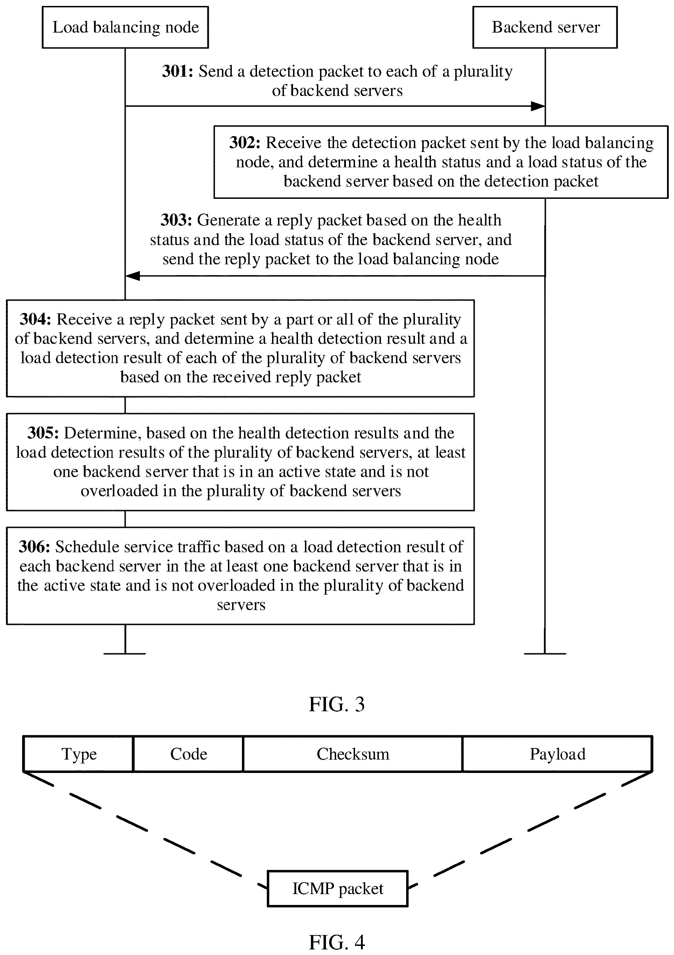

FIG. 3 is a flowchart of a load balancing method according to an embodiment of this application. The load balancing method is applied to a load balancing node included in a cloud platform. The load balancing node distributes service traffic to a plurality of backend servers according to a load balancing strategy. With reference to FIG. 3, the method includes the following steps.

**Step 301:** The load balancing node sends a detection packet to each of the plurality of backend servers, where the detection packet indicates the backend server to detect a health status and a load status of the backend server.

When indicating the backend server to detect the health status of the backend server, the detection packet sent in this embodiment of this application can also indicate the backend server to detect the load status of the backend server. Therefore, in this embodiment of this application, the detection packet does not need to be sent a plurality of times, and the detection packet needs only to be sent once to indicate the backend server to detect the health status and the load status of the backend server. In this way, a step of obtaining the health status and the load status of the backend server can be effectively simplified, to improve working efficiency of the backend server and the load balancing node.

In some embodiments, the detection packet is an internet control message protocol (internet control message protocol, ICMP) packet. The ICMP packet includes a detection type field and a load indicator field. The detection type field indicates that the ICMP packet is used to detect the health status and the load status. The load indicator field indicates a measurement indicator of the load status. Certainly, during actual application, the detection packet may alternatively be another type of packet, for example, a hypertext transfer protocol (hypertext transfer protocol, HTTP) packet. This is not limited in embodiments of this application. For ease of description, the following uses an example in which the detection packet is an ICMP packet for description.

In an example, with reference to FIG. 4, an ICMP packet in FIG. 4 includes a type (Type) field, a code (Code) field, a checksum (Checksum) field, and a payload (Payload) field. The type field and the code field may be used as detection type fields, to indicate that the ICMP packet currently needs to detect the health status and the load status of the backend server. The payload field may be used as the load indicator field, to indicate the measurement indicator of the load status that currently needs to be detected. The checksum field indicates a checksum of the ICMP packet.

The ICMP packet may be an ICMP packet based on internet protocol version 4 (internet protocol version 4, IPv4), or may be an ICMP packet based on internet protocol version 6 (internet protocol version 6, IPv6). In the ICMP packet over different protocols, the type field and the code field may indicate, using different values, that the health status and the load status of the backend server currently need to be detected.

For example, as shown in the following Table 1, in the IPv4-based ICMP packet, a value of the type field is 44, a value of the code field is 0, and the values of the type field and the code field are used to indicate that the health status and the load status of the backend server currently need to be detected. Content of the payload field is content shown in the 2^{nd} row and the 3^{rd} column in Table 1, to indicate the backend server to detect a CPU usage status, a TCP connection status, and the like of the backend server.

**Table 1**

| Type | Code | Payload |
|---|---|---|
| 44 | 0 | { "load"[ "CPUload", "TCP_conn", "... "] } |

As shown in the following Table 2, in the IPv6-based ICMP packet, a value of the type field is 244, a value of the code field is 0, and the values of the type field and the code field are used to indicate that the health status and the load status of the backend server currently need to be detected. Content of the payload field is content shown in the 2^{nd} row and the 3^{rd} column in Table 2, to indicate the backend server to detect a CPU usage status, a TCP connection status, and the like of the backend server.

**Table 2**

| Type | Code | Payload |
|---|---|---|
| 244 | 0 | { "load"[ "CPUload", "TCP_conn", "... "] } |

In some embodiments, before the load balancing node sends the detection packet to each of the plurality of backend servers, the load balancing node further generates the detection packet using a health detection script. In other words, the load balancing node loads the health detection script. In this case, the load balancing node can generate the detection packet using the health detection script. Certainly, during actual application, the load balancing node may alternatively generate the detection packet in another manner. For example, the load balancing node stores logic code for generating the detection packet, and the load balancing node can generate the detection packet using the logic code. This is not limited in embodiments of this application. For ease of description, the following uses an example in which the load balancing node generates the detection packet using the health detection script for description.

In some embodiments, before the load balancing node generates the detection packet using the health detection script, the load balancing node needs to obtain and load the health detection script. During actual application, the measurement indicator used to detect the load status of the backend server may be fixed, or may be adjusted based on different requirements. In other words, the measurement indicator may be fixed, or may dynamically change. When the measurement indicator is fixed, the health detection script used to generate the detection packet is also fixed. When the measurement indicator dynamically changes, the health detection script used to generate the detection packet also dynamically changes. Therefore, for the dynamically changing measurement indicator, different detection packets may be generated using different health detection scripts, to implement load detection based on different requirements, and avoid a change in implementation logic of the load balancing node. Only different health detection scripts need to be loaded for implementation. In different cases, the load balancing node obtains the health detection script in different manners.

When the measurement indicator of the load status remains unchanged, in some embodiments, the load balancing node stores the health detection script. In this case, the load balancing node can directly obtain the health detection script. In some other embodiments, the cloud platform further includes a load balancing management node. The load balancing management node is configured to manage the load balancing node included in the cloud platform. In this case, the load balancing management node stores the health detection script. The load balancing management node can send the stored health detection script to the load balancing node. In this way, the load balancing node can obtain the health detection script sent by the load balancing management node. In other words, when the measurement indicator of the load status remains unchanged, the health detection script may be pre-stored in the load balancing node, or may be sent by the load balancing management node.

When the measurement indicator of the load status dynamically changes, the load balancing node obtains the health detection script in a plurality of implementations. The following describes two of the plurality of implementations.

**In a first implementation,** the load balancing node generates the health detection script based on at least one load indicator. The at least one load indicator is the measurement indicator of the load status.

The load balancing node stores a correspondence between a load indicator and a health detection child script, and one load indicator corresponds to one health detection child script. In this case, the load balancing node determines, from the correspondence between a load indicator and a health detection child script based on the at least one load indicator, a health detection child script corresponding to each load indicator in the at least one load indicator, and sequentially superimposes the health detection child scripts corresponding to the load indicators, to obtain the health detection script. In other words, when the load balancing node stores the correspondence between a load indicator and a health detection child script, the health detection child scripts corresponding to the load indicators in the at least one load indicator can be combined, to obtain the health detection script.

During actual application, the health detection script may alternatively be generated in another manner. This is not limited in embodiments of this application. For example, the load balancing node may alternatively store a plurality of load indicator sets and a candidate health detection script corresponding to each load indicator set. The load balancing node can determine, from the plurality of load indicator sets, a load indicator set corresponding to the at least one load indicator, and determine, as the health detection script, the candidate health detection script corresponding to the load indicator set. In other words, the load balancing node pre-stores the candidate health detection script corresponding to the load indicator set. In this way, the candidate health detection script corresponding to the load indicator set that is in the plurality of load indicator sets and that is consistent with the at least one load indicator can be used as the health detection script.

In some embodiments, before the load balancing node generates the health detection script based on the at least one load indicator, the load balancing node can receive the at least one load indicator sent by the client.

In an example, the client displays a load indicator selection interface. The load indicator selection interface includes a plurality of load indicators. In response to a load indicator selection completion operation, the client sends the selected at least one load indicator to the load balancing node. To be specific, after the client displays the load indicator selection interface, a first user selects the at least one load indicator in the load indicator selection interface. After completing selection, the first user triggers the load indicator selection completion operation. In response to the load indicator selection completion operation triggered by the first user, the client determines the at least one load indicator selected by the first user, and then sends the at least one load indicator to the load balancing node.

The load indicator includes memory usage, central processing unit (central processing unit, CPU) usage, a number of running processes, system response time, a transmission control protocol (transmission control protocol, TCP) connection count, and the like. This is not limited in embodiments of this application.

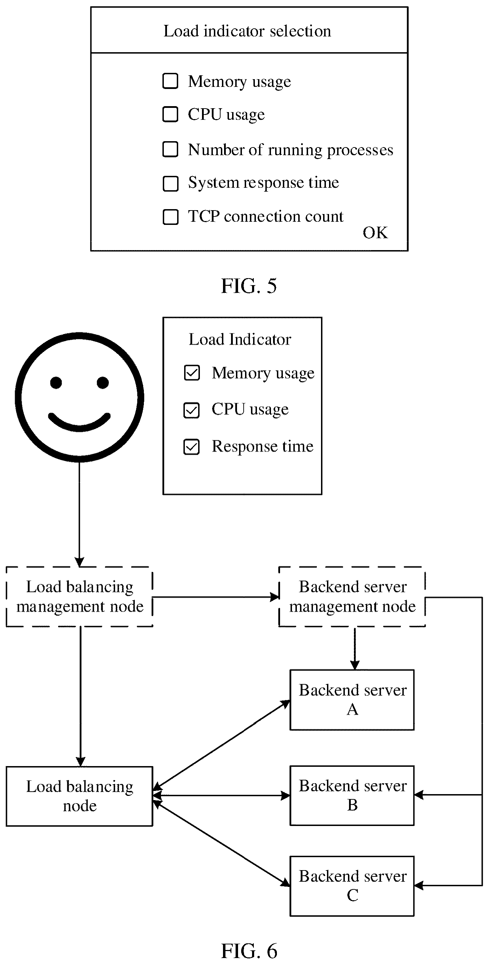

For example, with reference to FIG. 5, the client displays a load indicator selection interface shown in FIG. 5. Five load indicators, which are respectively the memory usage, the CPU usage, the number of running processes, the system response time, and the TCP connection count, are displayed in the load indicator selection interface. The first user can select the at least one load indicator in the load indicator selection interface. After completing selection, the first user taps an OK button to trigger the load indicator selection completion operation.

It should be noted that the load indicator field of the detection packet can indicate the at least one load indicator sent by the client, to indicate the backend server to detect the load status of the backend server based on the at least one load indicator.

In addition, in this embodiment of this application, the system response time can be determined by the backend server, or can be determined by the load balancing node. In different cases, the system response time represents different meanings. If the system response time is determined by the backend server, the backend server can use, as the system response time, a time length between a moment at which the detection packet sent by the load balancing node is received and a moment at which a reply packet is sent. If the system response time is determined by the load balancing node, for a backend server in the plurality of backend servers, the load balancing node can use, as the system response time, a time length between a moment at which the detection packet is sent and a moment at which a reply packet sent by the backend server is received.

In the foregoing content, the first user can select the at least one load indicator on the client, then the client can send the at least one load indicator to the load balancing node, and the load balancing node can receive the at least one load indicator. Certainly, during actual application, the at least one load indicator may alternatively be obtained in another manner. This is not limited in embodiments of this application. For example, the cloud platform may further include the load balancing management node. In this case, the client can send the at least one load indicator to the load balancing management node, and the load balancing management node can forward the at least one load indicator to the load balancing node.

**In a second implementation,** the load balancing management node generates the health detection script based on at least one load indicator, and then sends the health detection script to the load balancing node. The at least one load indicator is the measurement indicator of the load status.

An implementation process in which the load balancing management node generates the health detection script based on the at least one load indicator is similar to the foregoing implementation process in which the load balancing node can generate the health detection script based on the at least one load indicator. For detailed content, refer to the foregoing related content. Details are not described herein again.

In some embodiments, before the load balancing management node generates the health detection script based on the at least one load indicator, the load balancing management node can receive the at least one load indicator sent by a client.

An implementation process in which the load balancing management node receives the at least one load indicator sent by the client is similar to the foregoing implementation process in which the load balancing node receives the at least one load indicator sent by the client. For detailed content, refer to the foregoing related content. Details are not described herein again.

In conclusion, when the measurement indicator of the load status dynamically changes, the health detection script may be generated by the load balancing node based on the at least one load indicator, or may be generated by the load balancing management node based on the at least one load indicator and sent to the load balancing node. Certainly, during actual application, the health detection script may alternatively be obtained in another manner. This is not limited in embodiments of this application.

It should be noted that the health detection script may be an extended Berkeley packet filter (extended Berkeley packet filter, ebpf) script, or certainly, may be another type of script. This is not limited in embodiments of this application.

**Step 302:** The backend server receives the detection packet sent by the load balancing node, and determines the health status and the load status of the backend server based on the detection packet.

The backend server determines, based on the detection packet, the health status and the load status of the backend server using a backend server script. Certainly, during actual application, the backend server may alternatively determine the health status and the load status of the backend server in another manner. For example, the backend server stores logic code for determining the health status and the load status of the backend server, and the backend server can determine the health status and the load status of the backend server using the logic code. This is not limited in embodiments of this application. For ease of description, the following uses an example in which the backend server determines the health status and the load status of the backend server using the backend server script for description.

The detection type field included in the detection packet may be different values, and the different values correspond to different functions of the detection packet. Therefore, the backend server needs to make different replies to the detection packet with different functions in a targeted manner. To determine the function of the detection packet, in some embodiments, if the value of the detection type field included in the detection packet is a target value, the backend server can run the backend server script. If the value of the detection type field included in the detection packet is not the target value, the backend server does not run the backend server script.

If the value of the detection type field included in the detection packet is the target value, it indicates that the detection packet is used to detect a health status and a load status. In this case, the backend server can run the backend server script, and determine the health status and the load status of the backend server using the backend server script. If the value of the detection type field included in the detection packet is not the target value, it indicates that the detection packet is not used to detect the health status and the load status. In this case, the backend server does not run the backend server script.

The target value is preset, and is consistent with the value of the detection type field included in the detection packet that indicates the backend server to detect the health status and the load status of the backend server. For example, the detection packet is the IPv4-based ICMP packet, the value of the type field is 44, and the value of the code field is 0. In this case, the target value includes a first value and a second value, where the first value is 44, and the second value is 0. If the value of the type field included in the detection packet is the first value, and the value of the code field is the second value, it is determined that the value of the detection type field included in the detection packet is the target value. For another example, the detection packet is the IPv6-based ICMP packet, the value of the type field is 244, and the value of the code field is 0. In this case, the target value includes a first value and a second value, where the first value is 244, and the second value is 0. If the value of the type field included in the detection packet is the first value, and the value of the code field is the second value, it is determined that the value of the detection type field included in the detection packet is the target value.

In some embodiments, the backend server script can indicate the backend server to determine a connection status of a target port. The target port is a port used by the backend server to process the service traffic. The connection status of the target port can indicate whether the target port is connected or disconnected. In this case, the backend server determines the connection status of the target port by running the backend server script, and determines the health status of the backend server based on the connection status of the target port.

If the target port is connected, it is determined that the health status of the backend server is healthy. If the target port is disconnected, it is determined that the health status of the backend server is unhealthy.

If the target port is connected, it indicates that the backend server can normally process the service traffic. Therefore, it may be determined that the health status of the backend server is healthy. If the target port is disconnected, it indicates that the backend server cannot normally process the service traffic. Therefore, it may be determined that the health status of the backend server is unhealthy. Certainly, in some other embodiments, the connection status of the target port may alternatively be directly determined as the health status of the backend server. This is not limited in embodiments of this application.

In some embodiments, the backend server script can further indicate the backend server to determine the load status of the backend server based on the at least one load indicator indicated by a load indicator field of the detection packet. In this case, the backend server can determine the load status of the backend server by running the backend server script.

It should be noted that, alternatively, the backend server script may not indicate the backend server to determine the connection status of the target port. In this case, after receiving the detection packet, the backend server can determine the load status of the backend server, without determining the health status of the backend server, and then generate the reply packet based on the load status of the backend server in a subsequent step. In other words, when the backend server script does not indicate the backend server to determine the connection status of the target port, the backend server can directly generate the reply packet after determining the load status of the backend server. When the backend server script indicates the backend server to determine the connection status of the target port, the backend server needs to determine the connection status of the target port and the load status of the backend server, and then generates the reply packet based on the connection status of the target port and the load status of the backend server in a subsequent step.

In some embodiments, before the backend server determines the health status and the load status of the backend server, the backend server needs to obtain and load the backend server script. Similar to the foregoing descriptions, the measurement indicator used to detect the load status of the backend server may be fixed, or may be adjusted based on different requirements. In other words, the measurement indicator may be fixed, or may dynamically change. When the measurement indicator is fixed, the backend server script used to determine the load status of the backend server is also fixed. When the measurement indicator dynamically changes, the backend server script used to determine the load status of the backend server also dynamically changes. Therefore, for the dynamically changing measurement indicator, the load status of the backend server may be determined using different backend server scripts, to implement load detection based on different requirements, and avoid a change in implementation logic of the backend server. Only different backend servers scripts need to be loaded for implementation. In different cases, the backend server obtains the backend server script in different manners.

When the measurement indicator of the load status remains unchanged, in some embodiments, the backend server stores the backend server script. In this case, the backend server can directly obtain and load the backend server script. In some other embodiments, the cloud platform further includes the load balancing management node. The load balancing management node is configured to manage the load balancing node included in the cloud platform. In this case, the load balancing management node stores the backend server script. The load balancing management node can send the stored backend server script to the client, to indicate the client to load the backend server script to the plurality of backend servers. In this way, the backend server can obtain the backend server script sent by the load balancing management node. In other words, when the measurement indicator of the load status remains unchanged, the backend server script may be pre-stored in the backend server, or may be sent by the load balancing management node.

When the load balancing management node does not have permission to load the backend server script to the backend server, the load balancing management node can send the generated backend server script to the client. The first user can download the backend server script from the client, and then load the backend server script to the backend server. If the load balancing management node has the permission to load the backend server script to the backend server, the load balancing management node can directly send the backend server script to the backend server, and indicate the backend server to load the backend server script.

Optionally, after downloading the backend server script, the first user can independently verify the backend server script, to determine whether the backend server script is secure and reliable. When the first user determines that the backend server script is secure and reliable, the first user can load the backend server script to the backend server.

During actual application, a backend server management system may be used to manage the plurality of backend servers. In this case, if the load balancing management node does not have the permission to load the backend server script to the backend server, the first user can send the backend server script to the backend server management system. Then, the backend server management system distributes the backend server script to the plurality of backend servers. If the load balancing management node has the permission to load the backend server script to the backend server, the load balancing management node can directly send the backend server script to the backend server management system. Then, the backend server management system distributes the backend server script to the plurality of backend servers.

When the measurement indicator of the load status dynamically changes, the backend server obtains the backend server script in a plurality of implementations. The following describes two of the plurality of implementations.

**In a first implementation,** the backend server generates the backend server script based on the at least one load indicator. The at least one load indicator is the measurement indicator of the load status.

The backend server stores a correspondence between a load indicator and a backend server child script, and one load indicator corresponds to one backend server child script. In this case, the backend server determines, from the correspondence between a load indicator and a backend server child script based on the at least one load indicator, a backend server child script corresponding to each load indicator in the at least one load indicator, and sequentially superimposes the backend server child scripts corresponding to the load indicators, to obtain the backend server script. In other words, when the backend server stores the correspondence between a load indicator and a backend server child script, the backend server child scripts corresponding to the load indicators in the at least one load indicator can be combined, to obtain the backend server script.

During actual application, the backend server script may alternatively be generated in another manner. This is not limited in embodiments of this application. For example, the backend server may alternatively store the plurality of load indicator sets and a candidate backend server script corresponding to each load indicator set. The backend server can determine, from the plurality of load indicator sets, the load indicator set corresponding to the at least one load indicator, and determine, as the backend server script, a candidate backend server script corresponding to the load indicator set. In other words, the backend server pre-stores the candidate backend server script corresponding to the load indicator set. In this way, the candidate backend server script corresponding to the load indicator set that is in the plurality of load indicator sets and that is consistent with the at least one load indicator can be used as the backend server script.

In some embodiments, when the client has permission to send the at least one load indicator to the backend server, before the backend server generates the backend server script based on the at least one load indicator, the backend server can receive the at least one load indicator sent by the client.

In an example, the client displays the load indicator selection interface. The load indicator selection interface includes the plurality of load indicators. In response to the load indicator selection completion operation, the client sends the selected at least one load indicator to the backend server. To be specific, after the client displays the load indicator selection interface, the first user selects the at least one load indicator in the load indicator selection interface. After completing selection, the first user triggers the load indicator selection completion operation. In response to the load indicator selection completion operation triggered by the first user, the client determines the at least one load indicator selected by the first user, and then sends the at least one load indicator to the backend server.

In other words, the first user can select the at least one load indicator on the client, then the client can send the at least one load indicator to the backend server, and the backend server can receive the at least one load indicator. Certainly, during actual application, the at least one load indicator may alternatively be obtained in another manner. This is not limited in embodiments of this application. For example, the cloud platform may further include the load balancing management node. In this case, the client can send the at least one load indicator to the load balancing management node. When the load balancing management node has permission to send the at least one load indicator to the backend server, the load balancing management node can forward the at least one load indicator to the backend server.

**In a second implementation,** the load balancing management node generates the backend server script based on the at least one load indicator, and then sends the backend server script to the client or the backend server. The at least one load indicator is the measurement indicator of the load status.

An implementation process in which the load balancing management node generates the backend server script based on the at least one load indicator is similar to the foregoing implementation process in which the backend server can generate the backend server script based on the at least one load indicator. For detailed content, refer to the foregoing related content. Details are not described herein again.

When the load balancing management node does not have the permission to load the backend server script to the backend server, the load balancing management node sends the generated backend server script to the client. The first user can download the backend server script from the client, and then load the backend server script to the backend server.

Certainly, in some other embodiments, if the load balancing management node has the permission to load the backend server script to the backend server, the load balancing management node can directly send the backend server script to the backend server, and indicate the backend server to load the backend server script.

In some embodiments, before the load balancing management node generates the backend server script based on the at least one load indicator, the load balancing management node can receive the at least one load indicator sent by a client.

An implementation process in which the load balancing management node receives the at least one load indicator sent by the client is similar to the foregoing implementation process in which the load balancing node receives the at least one load indicator sent by the client. For detailed content, refer to the foregoing related content. Details are not described herein again.

In conclusion, when the measurement indicator of the load status dynamically changes, the backend server script may be generated by the backend server based on the at least one load indicator, or may be generated by the load balancing management node based on the at least one load indicator and sent to the backend server. Certainly, during actual application, the backend server script may alternatively be obtained in another manner. This is not limited in embodiments of this application.

According to the foregoing descriptions, the load balancing management node can generate the health detection script based on the at least one load indicator, and send the health detection script to the load balancing node, and can further generate the backend server script based on the at least one load indicator, and send the backend server script to the backend server. Therefore, in some embodiments, before the load balancing node generates the detection packet using the health detection script, the load balancing management node can receive the at least one load indicator sent by the client. The load balancing management node generates the health detection script and the backend server script based on the at least one load indicator. The backend server script is used to parse the detection packet and generate the reply packet. The load balancing management node sends the health detection script to the load balancing node, and sends the backend server script to the client, to indicate the client to load the backend server script to the plurality of backend servers.

The load balancing management node stores a correspondence among a load indicator, a health detection child script, and a backend server child script. One load indicator corresponds to one health detection child script and one backend server child script. In this case, the load balancing management node determines, from the correspondence among a load indicator, a health detection child script, and a backend server child script based on the at least one load indicator, the health detection child script and a backend server child script that correspond to each load indicator in the at least one load indicator, sequentially superimposes the health detection child scripts corresponding to the load indicators, to obtain the health detection script, and sequentially superimposes the backend server child scripts corresponding to the load indicators, to obtain the backend server script.

In other words, when the load balancing management node stores the correspondence among a load indicator, a health detection child script, and a backend server child script, the health detection child scripts and the backend server child scripts that correspond to the load indicators can be separately combined, to obtain the health detection script and the backend server script. During actual application, the health detection script and the backend server script may alternatively be generated in another manner. This is not limited in embodiments of this application. For example, the load balancing management node may alternatively store the plurality of load indicator sets, and the candidate health detection script and the candidate backend server script that correspond to each load indicator set. The load balancing management node can determine, from the plurality of load indicator sets, the load indicator set corresponding to the at least one load indicator, determine, as the health detection script, the candidate health detection script corresponding to the load indicator set, and determine, as the backend server script, the candidate backend server script corresponding to the load indicator set. In other words, the load balancing management node pre-stores the candidate health detection script and the candidate backend server script that correspond to the load indicator set. In this way, the candidate health detection script and the candidate backend server script that correspond to the load indicator set that is in the plurality of load indicator sets and that is consistent with the at least one load indicator sent by the client can be respectively used as the health detection script and the backend server script.

The backend server script may alternatively be an ebpf script, or certainly, may be another type of script. This is not limited in embodiments of this application.

**Step 303:** The backend server generates the reply packet based on the health status and the load status of backend server, and sends the reply packet to the load balancing node, where the reply packet includes the health status and the load status of the backend server.

In some embodiments, the reply packet is an ICMP packet. The ICMP packet includes a reply type field and a detection result field. The reply type field indicates that the ICMP packet is used to reply to the detection packet. The detection result field indicates the load status. Certainly, during actual application, the reply packet may alternatively be another type of packet, for example, an HTTP packet. This is not limited in embodiments of this application. For ease of description, the following uses an example in which the reply packet is an ICMP packet for description.

In an example, with reference to FIG. 4, an ICMP packet in FIG. 4 includes a type (Type) field, a code (Code) field, a checksum (Checksum) field, and a payload (Payload) field. The type field and the code field may be used as reply type fields, to indicate that the ICMP packet is a reply packet. The payload field may be used as the detection result field, to indicate the load status of the backend server. The checksum field indicates a checksum of the ICMP packet.

Similarly, the ICMP packet may be an IPv4-based ICMP packet, or may be an IPv6-based ICMP packet. In the ICMP packet over different protocols, the type field and the code field may indicate, using different values, that the ICMP packet is used to reply to the detection packet.

According to the foregoing descriptions, the backend server script may not indicate the backend server to determine the connection status of the target port. In this case, the load status of the backend server may be directly written into the detection result field. For example, as shown in the following Table 3, in the IPv4-based ICMP packet, a value of the type field is 45, a value of the code field is 0, and the values of the type field and the code field are used to indicate that the ICMP packet is used to reply to the detection packet. Content of the payload field is content shown in the 2^{nd} row and the 3^{rd} column in Table 3, to indicate the CPU usage status, the TCP connection status, and the like of the backend server.

**Table 3**

| Type | Code | Payload |
|---|---|---|
| 45 | 0 | { "load"[ "CPUload":, "TCP_conn":, "...":] } |

As shown in the following Table 4, in the IPv6-based ICMP packet, a value of the type field is 245, a value of the code field is 0, and the values of the type field and the code field are used to indicate that the ICMP packet is used to reply to the detection packet. Content of the payload field is content shown in the 2^{nd} row and the 3^{rd} column in Table 4, to indicate the CPU usage status, the TCP connection status, and the like of the backend server.

**Table 4**

| Type | Code | Payload |
|---|---|---|
| 245 | 0 | {"load"[ "CPUload":, "TCP_conn":, "...":] } |

In some embodiments, the backend server can write the health status and the load status of the backend server into the detection result field using the backend server script, to obtain the reply packet. In other words, if the backend server script can indicate the backend server to determine the connection status of the target port in the backend server, the connection status of the target port can be further written into the detection result field. In this way, the detection result field not only indicates the load status of the backend server, but also indicates the connection status of the target port.

**Step 304:** The load balancing node receives a reply packet sent by a part or all of the plurality of backend servers, and determines a health detection result and a load detection result of each of the plurality of backend servers based on the received reply packet, where the health detection result indicates whether the corresponding backend server is in an active state, and the load detection result indicates whether the corresponding backend server is overloaded.

In some embodiments, the load balancing node parses the received reply packet based on the health detection script, and determines, based on a parsing result, a health detection result and a load detection result of each backend server that sends the reply packet.

During actual application, because a network link is faulty, a backend server is unreachable, or the like, the load balancing node cannot receive reply packets sent by some backend servers. In this case, the load balancing node can receive only the reply packet sent by the part of the backend servers. In addition, due to a network delay or the like, even if the load balancing node receives the reply packet sent by the backend server, the reply packet may also time out. Therefore, in different cases, the load balancing node determines, based on the received reply packet, the health detection result and the load detection result of each of the plurality of backend servers in different manners. The following sequentially describes the manners.

For each of the plurality of backend servers, if no reply packet sent by the backend server is received, or a reply packet sent by the backend server is received after timeout, the health detection result of the backend server is determined as inactive, and the load detection result is determined as null. If the reply packet sent by the backend server is received before timeout, and a detection result field in the reply packet indicates that a connection status of a target port is disconnected, the health detection result of the backend server is determined as inactive, and the load detection result is determined as null. If the reply packet sent by the backend server is received before timeout, and the detection result field in the reply packet indicates that the connection status of the target port is connected, the health detection result of the backend server is determined as active, and the load detection result is determined as a load status indicated by the detection result field in the reply packet.

If no reply packet sent by the backend server is received, it indicates that a network link of the backend server is faulty or the backend server is unreachable. Therefore, the health detection result of the backend server may be determined as inactive, and the load detection result may be determined as null. If the reply packet sent by the backend server is received after timeout, it indicates that network quality of the backend server is poor, and a network delay exists. Therefore, the health detection result of the backend server may be determined as inactive, and the load detection result may be determined as null. If the reply packet sent by the backend server is received before timeout, and a detection result field in the reply packet indicates that a connection status of a target port is disconnected, it indicates that the backend server cannot normally process the service traffic. Therefore, the health detection result of the backend server may be determined as inactive, and the load detection result may be determined as null. If the reply packet sent by the backend server is received before timeout, and the detection result field in the reply packet indicates that the connection status of the target port is connected, it indicates that the load balancing node receives the reply packet sent by the backend server, the reply packet does not time out, and the backend server can normally process service traffic. Therefore, it may be determined that the health detection result of the backend server is active, and the load detection result is determined as a load status indicated by the detection result field in the reply packet.

**Step 305:** The load balancing node determines, based on the health detection results and the load detection results of the plurality of backend servers, at least one backend server that is in the active state and is not overloaded in the plurality of backend servers.

A backend server whose health detection result is active in the plurality of backend servers is determined as a backend server in the active state, and the at least one backend server that is in the active state and is not overloaded in the plurality of backend servers is determined based on a load detection result of the backend server in the active state.

An implementation process of determining, based on the load detection result of the backend server in the active state, the at least one backend server that is in the active state and is not overloaded in the plurality of backend servers includes: determining, based on the load detection result of the backend server in the active state, a load weight of the at least one backend server in the active state in the plurality of backend servers, and determining, based on the load weight of the at least one backend server in the active state in the plurality of backend servers, the at least one backend server that is in the active state and is not overloaded in the plurality of backend servers.

In some embodiments, for any backend server in the at least one backend server in the active state, at least one detection parameter may be determined based on a load detection result of the backend server, the at least one detection parameter is in a one-to-one correspondence with the at least one load indicator, and a load weight of the backend server is determined based on the at least one detection parameter. After each backend server in the active state is processed in the same manner, the load weight of the at least one backend server in the active state can be determined.

The load indicator includes the memory usage, the CPU usage, the number of running processes, the system response time, and the like. Therefore, the load detection result includes a detection result corresponding to each load indicator in the at least one load indicator. Load indicators indicate load statuses of the backend server in different dimensions, to be specific, units of detection results corresponding to different load indicators are different. For example, units of detection results corresponding to the memory usage and the CPU usage are percentage (or rate), a unit of a detection result corresponding to the system response time is time (or rate), and units of detection results corresponding to the TCP connection count and the number of running processes are number. Therefore, the load statuses of the backend server in the different dimensions are converted into those in a same dimension, so that it can be more convenient to subsequently determine the load weight. In addition, because units of detection results corresponding to different load indicators are different, for different load indicators, detection results corresponding to the load indicators are converted in different manners. The following sequentially describes the manners.

When the load indicator is the memory usage, because the unit of the detection result corresponding to the memory usage is percentage (or rate), the detection result corresponding to the memory usage may be directly used as a detection parameter corresponding to the memory usage.

When the load indicator is the CPU usage, because the unit of the detection result corresponding to the CPU usage is percentage (or rate), the detection result corresponding to the CPU usage may be directly used as a detection parameter corresponding to the CPU usage.

When the load indicator is the TCP connection count, a value obtained by dividing the detection result corresponding to the TCP connection count by a maximum connection count is used as a detection parameter corresponding to the TCP connection count.

When the load indicator is the number of running processes, a value obtained by dividing the detection result corresponding to the number of running processes by a maximum number of processes is used as a detection parameter corresponding to the number of running processes.

When the load indicator is the system response time, if the detection result corresponding to the system response time is less than a response time threshold, a detection parameter corresponding to the system response time is determined as 0, or if the detection result corresponding to the system response time is greater than or equal to the response time threshold, a value obtained by subtracting the response time threshold from the detection result corresponding to the system response time and then dividing an obtained value by the response time threshold is used as the detection parameter corresponding to the system response time.

The maximum connection count is preset. Maximum connection counts corresponding to different backend servers may be the same or may be different. The maximum connection count is a maximum TCP connection count of connections that can be implemented by a corresponding backend server. The maximum number of processes is preset. Maximum numbers of processes corresponding to different backend servers may be the same or may be different. The maximum number of processes is a maximum number of processes that can be run by the corresponding backend server. The response time threshold is preset. Response time thresholds corresponding to different backend servers may be the same or may be different, and are related to performance of corresponding backend servers. Better performance of the backend server indicates a smaller response time threshold. Certainly, different backend servers may alternatively correspond to a same response time threshold. This is not limited in embodiments of this application. A load weight threshold is preset. In addition, in different cases, the load weight threshold may be further adjusted based on different requirements.

After the detection result corresponding to each load indicator in the at least one load indicator is converted, the at least one detection parameter can be obtained. In this case, a largest detection parameter in the at least one detection parameter may be used as the load weight of the backend server. In some other embodiments, the load balancing node stores a correspondence between a load indicator and an indicator weight. The load balancing node can determine, from the correspondence between a load indicator and an indicator weight, an indicator weight corresponding to each detection parameter, and add values obtained by multiplying the at least one detection parameter by the corresponding indicator weights, to obtain the load weight of the backend server. Certainly, the load weight of the backend server may alternatively be determined in another manner. This is not limited in embodiments of this application.

A backend server whose load weight is less than the load weight threshold in the at least one backend server in the active state is determined as the at least one backend server that is in the active state and is not overloaded in the plurality of backend servers.

The load weight can represent the load status of the backend server. If the load weight is less than the load weight threshold, it indicates that the backend server is not overloaded. Therefore, it may be determined that the backend server is the backend server that is in the active state and is not overloaded. If the load weight is greater than or equal to the load weight threshold, it indicates that the backend server has been overloaded. Therefore, the backend server may not be determined as the backend server that is in the active state and is not overloaded.

It should be noted that, if a load weight of each backend server in the at least one backend server in the active state is greater than or equal to the load weight threshold, it is considered that the plurality of backend servers are overloaded. In this case, the first user may be prompted to add a new backend server, to expand a cluster processing capability, and/or randomly discard the service traffic, to reduce the service traffic distributed to the backend server, and/or send a reset command to a client that generates the service traffic, to disconnect a transmission path of the service traffic. If the load balancing node has permission to add a backend server, the load balancing node may directly add the new backend server when the load weight of each backend server is greater than or equal to the load weight threshold.

**Step 306:** The load balancing node schedules the service traffic based on the load detection result of each backend server in the at least one backend server that is in the active state and is not overloaded in the plurality of backend servers.

In some embodiments, the load balancing node determines the load weight of each backend server in the at least one backend server based on the load detection result of the at least one backend server that is in the active state and is not overloaded in the plurality of backend servers. The load weight indicates a load status of the corresponding backend server. The load balancing node schedules the service traffic based on the load weight of the at least one backend server.

According to the foregoing descriptions, a traffic scheduling algorithm includes a round robin algorithm, a randomized algorithm, a weighted algorithm, a least connections algorithm, and the like. The foregoing plurality of traffic scheduling algorithms may be classified into two types, namely, a scheduling algorithm based on a scheduling weight and a scheduling algorithm not based on a scheduling weight. The method provided in this embodiment of this application can be combined with the foregoing scheduling algorithm. Different types of traffic scheduling algorithms are combined with this embodiment of this application in different manners. The following separately describes the manners.

**A type of the traffic scheduling algorithm is the scheduling algorithm based on a scheduling weight.** In this case, the load balancing node adjusts, based on a load weight of a first-type backend server in the at least one backend server that is in the active state and is not overloaded in the plurality of backend servers, a scheduling weight of the first-type backend server, to reduce a scheduling priority of the first-type backend server. The first-type backend server is a backend server whose load weight is greater than or equal to a load threshold. The scheduling weight indicates a scheduling priority of the corresponding backend server. The load balancing node schedules, according to the scheduling algorithm based on a scheduling weight, the service traffic based on a scheduling weight of a second-type backend server in the at least one backend server and an adjusted scheduling weight of the first-type backend server. The second-type backend server is a backend server whose load weight is less than the load threshold.

In some embodiments, for each backend server in the first-type backend server, the load balancing node can multiply, by a scheduling weight of the backend server, a value obtained by subtracting a load weight of the backend server from 1, to obtain an adjusted scheduling weight of the backend server. Certainly, in some other embodiments, a difference between a value obtained by multiplying the load weight of the backend server by 100 and the scheduling weight of the backend server may alternatively be determined as the adjusted scheduling weight of the backend server.

It should be noted that the scheduling weight is preset, and is related to performance of a corresponding backend server.

**A type of the traffic scheduling algorithm is the scheduling algorithm not based on a scheduling weight.** In this case, the load balancing node selects a second-type backend server from the at least one backend server based on the load weight of the at least one backend server that is in the active state and is not overloaded in the plurality of backend servers. The second-type backend server is a backend server whose load weight is less than a load threshold. The load balancing node schedules the service traffic according to the scheduling algorithm not based on a scheduling weight based on the second-type backend server.

With reference to FIG. 6, the following describes the load balancing method provided in this embodiment of this application.

With reference to FIG. 6, the first user can select the at least one load indicator on the client, and trigger the load indicator selection completion operation. In response to the load indicator selection completion operation triggered by the first user, the client determines the at least one load indicator selected by the first user, and then sends the at least one load indicator to the load balancing management node. The load balancing management node receives the at least one load indicator sent by the client, generates the health detection script and the backend server script based on the at least one load indicator, and then sends the health detection script to the load balancing node and sends the backend server script to the client. The first user downloads the backend server script from the client, and then sends the backend server script to the backend server management node. Then, the backend server management node distributes the backend server script to the plurality of backend servers. After the load balancing management node sends the health detection script to the load balancing node, the load balancing node receives and loads the health detection script. Then, the load balancing node sends the detection packet to each of the plurality of backend servers. The backend server receives the detection packet sent by the load balancing node, determines the health status and the load status of the backend server based on the detection packet, and generates the reply packet. The backend server sends the reply packet to the load balancing node. The load balancing node receives the reply packet sent by the part or all of the plurality of backend servers, determines, based on the received reply packet, the at least one backend server that is in an active state and is not overloaded in the plurality of backend servers, and then schedules the service traffic based on the load detection result of each backend server in the at least one backend server that is in the active state and is not overloaded in the plurality of backend servers.

The health detection result of the backend server can indicate whether the corresponding backend server is in the active state, and the load detection result can indicate whether the corresponding backend server is overloaded. Therefore, the health detection result and the load detection result of each of the plurality of backend servers are determined, and the service traffic is scheduled based on the health detection results and the load detection results of the plurality of backend servers. This can avoid an overload of the backend server, to avoid a crash of the backend server, thereby effectively ensuring efficiency of processing the service traffic.

In addition, when indicating the backend server to detect the health status of the backend server, the detection packet sent in this embodiment of this application can also indicate the backend server to detect the load status of the backend server. Therefore, in this embodiment of this application, the detection packet does not need to be sent the plurality of times, and the detection packet needs only to be sent once to indicate the backend server to detect the health status and the load status of the backend server. In this way, the step of obtaining the health status and the load status of the backend server can be effectively simplified, to improve working efficiency of the backend server and the load balancing node. In addition, the load balancing method provided in this embodiment of this application can be further combined with the traffic scheduling algorithm. This can effectively resolve overloading of the backend server, to be specific, improve efficiency of processing the service traffic, without increasing additional hardware and software costs.

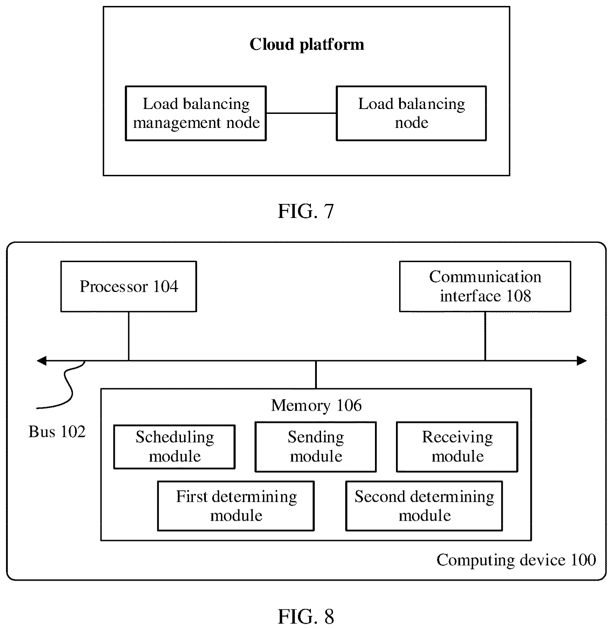

FIG. 7 is a diagram of an architecture of a cloud platform according to an embodiment of this application. The cloud platform includes a load balancing node. The load balancing node distributes service traffic to a plurality of backend servers according to a load balancing strategy. Optionally, the cloud platform further includes a load balancing management node. The load balancing management node is configured to manage the load balancing node included in the cloud platform. The load balancing node establishes a communication connection to the load balancing management node.

The load balancing node is configured to: send a detection packet to each of the plurality of backend servers, receive a reply packet sent by a part or all of the plurality of backend servers, and determine a health detection result and a load detection result of each of the plurality of backend servers based on the received reply packet. The load balancing node schedules the service traffic based on the health detection results and the load detection results of the plurality of backend servers.

The load balancing management node is configured to: receive at least one load indicator sent by a client, generate a health detection script and a backend server script based on the at least one load indicator, and then send the health detection script to the load balancing node and send the backend server script to the client, to indicate the client to load the backend server script to the plurality of backend servers.

Both the load balancing node and the load balancing management node in FIG. 7 may be implemented by software or hardware, or may be implemented by hardware. For example, the following uses the load balancing node as an example to describe an implementation of the load balancing node. Similarly, for an implementation of the load balancing management node, refer to the implementation of the load balancing node.

The load balancing node may include code run on a computing instance. The computing instance may include at least one of a physical host (computing device), a virtual machine, and a container. Further, there may be one or more computing instances. For example, the load balancing node may include code run on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed on a same virtual private cloud (virtual private cloud, VPC), or may be distributed on a plurality of VPCs. Generally, one VPC is set in one region. A communication gateway needs to be set on each VPC for communication between two VPCs in a same region or between VPCs in different regions. An interconnection between the VPCs is implemented through the communication gateway.

The load balancing node may include at least one computing device, for example, a server. Alternatively, the load balancing node may be a device implemented using an application-specific integrated circuit (application-specific integrated circuit, ASIC) or a programmable logic device (programmable logic device, PLD), or the like. The PLD may be a complex programmable logic device (complex programmable logic device, CPLD), a field-programmable gate array (field-programmable gate array, FPGA), generic array logic (generic array logic, GAL), or any combination thereof.

A plurality of computing devices included in the load balancing node may be distributed in a same region, or may be distributed in different regions. The plurality of computing devices included in the load balancing node may be distributed in a same AZ, or may be distributed in different AZs. Similarly, the plurality of computing devices included in the load balancing node may be distributed on a same VPC, or may be distributed on a plurality of VPCs. The plurality of computing devices may be any combination of computing devices such as a server, an ASIC, a PLD, a CPLD, an FPGA, and GAL.

An embodiment of this application further provides a computing device 100. As shown in FIG. 8, the computing device 100 includes a bus 102, a processor 104, a memory 106, and a communication interface 108. The processor 104, the memory 106, and the communication interface 108 communicate with each other through the bus 102. The computing device 100 may be a server or a terminal device. It should be understood that quantities of processors and memories in the computing device 100 are not limited in this application.

The bus 102 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used for representation in FIG. 8, but this does not mean that there is only one bus or only one type of bus. The bus 102 may include a path for transmitting information between components (for example, the memory 106, the processor 104, and the communication interface 108) of the computing device 100.

The processor 104 may include any one or more of processors such as a central processing unit (central processing unit, CPU), a graphics processing unit (graphics processing unit, GPU), a microprocessor (microprocessor, MP), a digital signal processor (digital signal processor, DSP), and an integrated circuit. The integrated circuit is, for example, an ASIC, a PLD, or a combination thereof. Optionally, the PLD is a CPLD, an FPGA, GAL, or any combination thereof.

The memory 106 may include a volatile memory (volatile memory), for example, a random access memory (random access memory, RAM). The memory 106 may further include a non-volatile memory (non-volatile memory), for example, a read-only memory (read-only memory, ROM), a flash memory, a hard disk drive (hard disk drive, HDD), or a solid state drive (solid state drive, SSD), or any other medium that can be configured to carry or store expected program code in a form of an instruction or a data structure and that can be accessed by a computer, but is not limited thereto. The memory 106 exists independently, and is connected to the processor 104 through the bus 102, or the memory 106 is integrated with the processor 104.

The memory 106 stores executable program code. The processor 104 executes the executable program code to separately implement functions of the foregoing load balancing node or the foregoing load balancing management node, to implement the load balancing method. In other words, the memory 106 stores instructions used to perform the load balancing method.

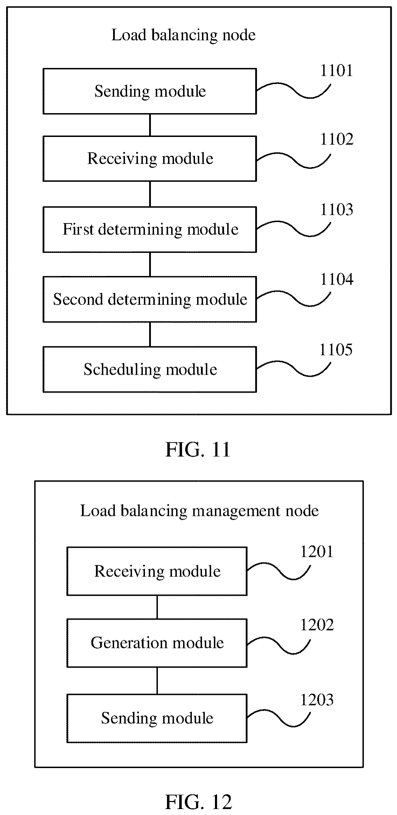

For example, the memory 106 stores executable code, and the processor 104 executes the executable code to separately implement functions of a sending module, a receiving module, a first determining module, a second determining module, and a scheduling module in a load balancing node shown in FIG. 11, or implement functions of a receiving module, a generation module, and a sending module in a load balancing management node shown in FIG. 12, to implement the load balancing method provided in embodiments of this application. In other words, the memory 106 stores instructions used to perform the load balancing method provided in embodiments of this application.

The communication interface 108 implements communication between the computing device 100 and another device or a communication network via a transceiver module, for example, but not limited to, a network interface card or a transceiver. The network interface includes a wired communication interface, or further includes a wireless communication interface. The wired communication interface is, for example, an Ethernet interface. The Ethernet interface is an optical interface, an electrical interface, or a combination thereof. The wireless communication interface is a wireless local area network (wireless local area network, WLAN) interface, a cellular network communication interface, a combination thereof, or the like.

An embodiment of this application further provides a computing device cluster. The computing device cluster includes a plurality of computing devices. The computing device may be a server, for example, a central server, an edge server, or a local server in a local data center. In some embodiments, the computing device may alternatively be a terminal device, for example, a desktop computer, a notebook computer, or a smartphone.

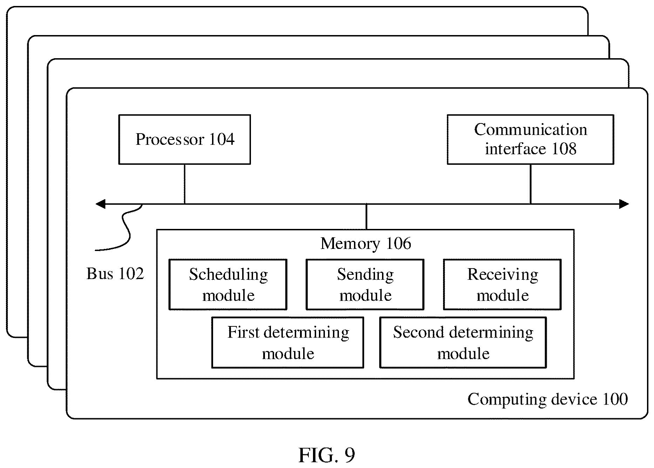

As shown in FIG. 9, the computing device cluster includes a plurality of computing devices 100. Memories 106 in the plurality of computing devices 100 in the computing device cluster may store same instructions used to perform the foregoing load balancing method.

In some possible implementations, the memories 106 in the plurality of computing devices 100 in the computing device cluster may alternatively separately store a part of the instructions used to perform the foregoing load balancing method. In other words, a combination of the plurality of computing devices 100 may jointly execute all instructions used to perform the foregoing load balancing method. For example, the plurality of computing devices 100 each include a load balancing node and a load balancing management node. Memories 106 of the load balancing node and the load balancing management node separately store a part of the instructions used for the foregoing load balancing method. A combination of the load balancing node and the load balancing management node can jointly execute all the instructions for the foregoing load balancing method.

It should be noted that different instructions may be stored in memories 106 in different computing devices 100 in the computing device cluster, and are separately used to perform a part of functions of the load balancing node and the load balancing management node. In other words, instructions stored in memories 106 in different computing devices 100 may be used to implement a function of a part or all of modules included in the load balancing node or the load balancing management node.

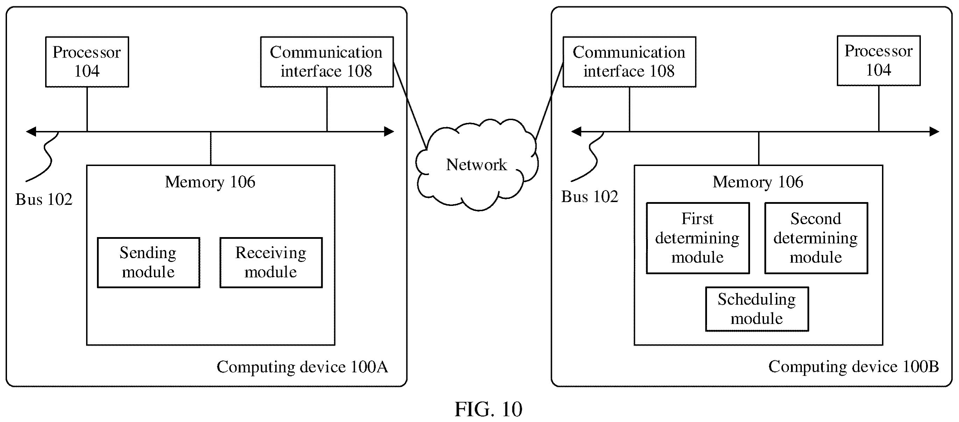

In some possible implementations, one or more computing devices in the computing device cluster may be connected through a network. The network may be a wide area network, a local area network, or the like. FIG. 10 shows a possible implementation. As shown in FIG. 10, two computing devices 100A and 100B are connected to each other through a network, and specifically, connected to the network through a communication interface in each computing device. In this type of possible implementation, a memory 106 in the computing device 100A stores instructions for performing functions of one part of modules included in the load balancing node or the load balancing management node. In addition, a memory 106 in the computing device 100B stores instructions for performing functions of the other part of the modules included in the load balancing node or the load balancing management node.

For example, the memory 106 in the computing device 100A stores instructions for performing functions of a sending module and a receiving module that are included in the load balancing node. In addition, the memory 106 in the computing device 100B stores instructions for functions of a first determining module, a second determining module, and a scheduling module that are included in the load balancing node.

It should be understood that functions of the computing device 100A shown in FIG. 10 may alternatively be implemented by a plurality of computing devices 100. Similarly, functions of the computing device 100B may alternatively be implemented by a plurality of computing devices 100.

FIG. 11 is a diagram of a structure of a load balancing node according to an embodiment of this application. The load balancing node is a load balancing node included in a cloud platform. The load balancing node distributes service traffic to a plurality of backend servers according to a load balancing strategy. With reference to FIG. 11, the load balancing node includes a sending module 1101, a receiving module 1102, a first determining module 1103, a second determining module 1104, and a scheduling module 1105.

The sending module 1101 is configured to send a detection packet to each of a plurality of backend servers, where the detection packet indicates the backend server to detect a health status and a load status of the backend server. For a detailed implementation process, refer to corresponding content in the foregoing embodiments. Details are not described herein again.

The receiving module 1102 is configured to receive a reply packet sent by a part or all of the plurality of backend servers, where the reply packet includes a health status and a load status of a corresponding backend server. For a detailed implementation process, refer to corresponding content in the foregoing embodiments. Details are not described herein again.

The first determining module 1103 is configured to determine a health detection result and a load detection result of each of the plurality of backend servers based on the received reply packet, where the health detection result indicates whether the corresponding backend server is in an active state, and the load detection result indicates whether the corresponding backend server is overloaded. For a detailed implementation process, refer to corresponding content in the foregoing embodiments. Details are not described herein again.

The second determining module 1104 is configured to determine, based on the health detection results and the load detection results of the plurality of backend servers, at least one backend server that is in an active state and is not overloaded in the plurality of backend servers. For a detailed implementation process, refer to corresponding content in the foregoing embodiments. Details are not described herein again.

The scheduling module 1105 is configured to schedule the service traffic based on a load detection result of each backend server in the at least one backend server. For a detailed implementation process, refer to corresponding content in the foregoing embodiments. Details are not described herein again.

Optionally, the load balancing node further includes:
a generation module, configured to generate the detection packet using a health detection script.

The first determining module 1103 is specifically configured to:
parse the received reply packet based on the health detection script, and determine, based on a parsing result, a health detection result and a load detection result of each backend server that sends the reply packet.

Optionally, the detection packet is an internet control message protocol ICMP packet. The ICMP packet includes a detection type field and a load indicator field. The detection type field indicates that the ICMP packet is used to detect the health status and the load status. The load indicator field indicates a measurement indicator of the load status.

Optionally, the scheduling module 1105 is specifically configured to:
determine a load weight of each backend server in the at least one backend server based on the load detection result of the at least one backend server, where the load weight indicates a load status of the corresponding backend server; and
schedule the service traffic based on the load weight of the at least one backend server.

Optionally, the scheduling module 1105 is specifically configured to:
adjust a scheduling weight of a first-type backend server in the at least one backend server based on a load weight of the first-type backend server, to reduce a scheduling priority of the first-type backend server, where the first-type backend server is a backend server whose load weight is greater than or equal to a load threshold, and the scheduling weight indicates a scheduling priority of the corresponding backend server; and
schedule the service traffic based on a scheduling weight of a second-type backend server in the at least one backend server and an adjusted scheduling weight of the first-type backend server, where the second-type backend server is a backend server whose load weight is less than the load threshold.

Optionally, the scheduling module 1105 is specifically configured to:
select a second-type backend server from the at least one backend server based on the load weight of the at least one backend server, where the second-type backend server is a backend server whose load weight is less than a load threshold; and
schedule the service traffic based on the second-type backend server.

The health detection result of the backend server can indicate whether the corresponding backend server is in the active state, and the load detection result can indicate whether the corresponding backend server is overloaded. Therefore, the health detection result and the load detection result of each of the plurality of backend servers are determined, and the service traffic is scheduled based on the health detection results and the load detection results of the plurality of backend servers. This can avoid an overload of the backend server, to avoid a crash of the backend server, thereby effectively ensuring efficiency of processing the service traffic.

In addition, when indicating the backend server to detect the health status of the backend server, the detection packet sent in this embodiment of this application can also indicate the backend server to detect the load status of the backend server. Therefore, in this embodiment of this application, the detection packet does not need to be sent a plurality of times, and the detection packet needs only to be sent once to indicate the backend server to detect the health status and the load status of the backend server. In this way, a step of obtaining the health status and the load status of the backend server can be effectively simplified, to improve working efficiency of the backend server and the load balancing node. In addition, a load balancing method provided in embodiments of this application can be further combined with a traffic scheduling algorithm. This can effectively resolve overloading of the backend server, to be specific, improve efficiency of processing the service traffic, without increasing additional hardware and software costs.

It should be noted that, when the load balancing node provided in the foregoing embodiment performs load balancing, division into the foregoing functional modules is used merely as an example for illustration. During actual application, the foregoing functions may be allocated to different functional modules for implementation as required, that is, an inner structure of an apparatus is divided into different functional modules to implement all or a part of the foregoing functions described above. In addition, the load balancing node provided in the foregoing embodiment and the load balancing method embodiments belong to a same concept. For a specific implementation process of the load balancing node, refer to the method embodiments. Details are not described herein again.

FIG. 12 is a diagram of a structure of a load balancing management node according to an embodiment of this application. The load balancing management node is a load balancing management node included in a cloud platform. The load balancing management node is configured to manage a load balancing node included in the cloud platform. With reference to FIG. 12, the load balancing management node includes a receiving module 1201, a generation module 1202, and a sending module 1203.

The receiving module 1201 is configured to receive at least one load indicator sent by a client, where the at least one load indicator is a measurement indicator of a load status. For a detailed implementation process, refer to corresponding content in the foregoing embodiments. Details are not described herein again.

The generation module 1202 is configured to generate a health detection script and a backend server script based on the at least one load indicator, where the backend server script is used to parse a detection packet and generate a reply packet. For a detailed implementation process, refer to corresponding content in the foregoing embodiments. Details are not described herein again.

The sending module 1203 is configured to: send the health detection script to the load balancing node, and send the backend server script to the client, to indicate the client to load the backend server script to a plurality of backend servers. For a detailed implementation process, refer to corresponding content in the foregoing embodiments. Details are not described herein again.

A health detection result of the backend server can indicate whether the corresponding backend server is in an active state, and a load detection result can indicate whether the corresponding backend server is overloaded. Therefore, a health detection result and a load detection result of each of the plurality of backend servers are determined, and service traffic is scheduled based on the health detection results and the load detection results of the plurality of backend servers. This can avoid an overload of the backend server, to avoid a crash of the backend server, thereby effectively ensuring efficiency of processing the service traffic.

In addition, when indicating the backend server to detect a health status of the backend server, the detection packet sent in this embodiment of this application can also indicate the backend server to detect a load status of the backend server. Therefore, in this embodiment of this application, the detection packet does not need to be sent a plurality of times, and the detection packet needs only to be sent once to indicate the backend server to detect the health status and the load status of the backend server. In this way, a step of obtaining the health status and the load status of the backend server can be effectively simplified, to improve working efficiency of the backend server and the load balancing node. In addition, a load balancing method provided in embodiments of this application can be further combined with a traffic scheduling algorithm. This can effectively resolve overloading of the backend server, to be specific, improve efficiency of processing the service traffic, without increasing additional hardware and software costs.

It should be noted that, when the load balancing management node provided in the foregoing embodiment performs load balancing, division into the foregoing functional modules is used merely as an example for illustration. During actual application, the foregoing functions may be allocated to different functional modules for implementation as required, that is, an inner structure of an apparatus is divided into different functional modules to implement all or a part of the foregoing functions described above. In addition, the load balancing management node provided in the foregoing embodiment and the load balancing method embodiments belong to a same concept. For a specific implementation process of the load balancing management node, refer to the method embodiments. Details are not described herein again.

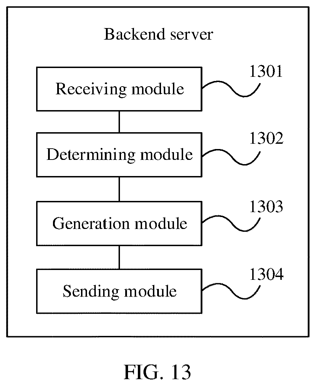

FIG. 13 is a diagram of a structure of a backend server according to an embodiment of this application. A load balancing node included in a cloud platform distributes service traffic to a plurality of backend servers according to a load balancing strategy. With reference to FIG. 13, the backend server includes a receiving module 1301, a determining module 1302, a generation module 1303, and a sending module 1304.

The receiving module 1301 is configured to receive a detection packet sent by the load balancing node, where the detection packet indicates the backend server to detect a health status and a load status of the backend server. For a detailed implementation process, refer to corresponding content in the foregoing embodiments. Details are not described herein again.

The determining module 1302 is configured to determine the health status and the load status of the backend server based on the detection packet. For a detailed implementation process, refer to corresponding content in the foregoing embodiments. Details are not described herein again.

The generation module 1303 is configured to generate a reply packet based on the health status and the load status of the backend server, where the reply packet includes the health status and the load status. For a detailed implementation process, refer to corresponding content in the foregoing embodiments. Details are not described herein again.

The sending module 1304 is configured to send the reply packet to the load balancing node. For a detailed implementation process, refer to corresponding content in the foregoing embodiments. Details are not described herein again.

Optionally, the determining module 1302 is specifically configured to:
determine, based on the detection packet, the health status and the load status of the backend server using a loaded backend server script.

The generation module 1303 is specifically configured to:
generate, based on the health status and the load status of the backend server, a reply packet using the backend server script.

Optionally, the backend server further includes:
an obtaining module, configured to: obtain the backend server script from a client and load the backend server script.

A health detection result of the backend server can indicate whether the corresponding backend server is in an active state, and a load detection result can indicate whether the corresponding backend server is overloaded. Therefore, a health detection result and a load detection result of each of the plurality of backend servers are determined, and the service traffic is scheduled based on the health detection results and the load detection results of the plurality of backend servers. This can avoid an overload of the backend server, to avoid a crash of the backend server, thereby effectively ensuring efficiency of processing the service traffic.

In addition, when indicating the backend server to detect the health status of the backend server, the detection packet sent in this embodiment of this application can also indicate the backend server to detect the load status of the backend server. Therefore, in this embodiment of this application, the detection packet does not need to be sent a plurality of times, and the detection packet needs only to be sent once to indicate the backend server to detect the health status and the load status of the backend server. In this way, a step of obtaining the health status and the load status of the backend server can be effectively simplified, to improve working efficiency of the backend server and the load balancing node. In addition, a load balancing method provided in embodiments of this application can be further combined with a traffic scheduling algorithm. This can effectively resolve overloading of the backend server, to be specific, improve efficiency of processing the service traffic, without increasing additional hardware and software costs.

It should be noted that, when the backend server provided in the foregoing embodiment performs load balancing, division into the foregoing functional modules is used merely as an example for illustration. During actual application, the foregoing functions may be allocated to different functional modules for implementation as required, that is, an inner structure of an apparatus is divided into different functional modules to implement all or a part of the foregoing functions described above. In addition, the backend server provided in the foregoing embodiment and the load balancing method embodiments belong to a same concept. For a specific implementation process of the load balancing node, refer to the method embodiments. Details are not described herein again.

The sending module, the receiving module, the first determining module, the second determining module, and the scheduling module in the load balancing node shown in FIG. 11, the receiving module, the generation module, and the sending module in the load balancing management node shown in FIG. 12, and the receiving module, the determining module, the generation module, and the sending module in the backend server shown in FIG. 13 may be all implemented by software, or may be all implemented by hardware, or may be implemented by a combination of the software and the hardware. The following uses the sending module in the load balancing node as an example to describe an implementation of the sending module. Similarly, for an implementation of the foregoing another module, refer to the implementation of the sending module.

A module is used as an example of a software functional unit, and the sending module may include code run on a computing instance. The computing instance may include at least one of a physical host, a virtual machine, and a container. Further, there may be one or more computing instances. For example, the sending module may include code run on a plurality of hosts/virtual machines/containers. It should be noted that the plurality of hosts/virtual machines/containers used to run the code may be distributed in a same region, or may be distributed in different regions. Further, the plurality of hosts/virtual machines/containers used to run the code may be distributed in a same AZ, or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed on a same VPC, or may be distributed on a plurality of VPCs. Generally, one VPC is set in one region. A communication gateway needs to be set on each VPC for communication between two VPCs in a same region or between VPCs in different regions. An interconnection between the VPCs is implemented through the communication gateway.

A module is used as an example of a hardware functional unit, and the sending module may include at least one computing device, for example, a server. Alternatively, the sending module may be a device implemented using an ASIC or implemented using a PLD, or the like. The PLD may be implemented by a CPLD, an FPGA, GAL, or any combination thereof.

A plurality of computing devices included in the sending module may be distributed in a same region, or may be distributed in different regions. The plurality of computing devices included in the sending module may be distributed in a same AZ, or may be distributed in different AZs. Similarly, the plurality of computing devices included in the sending module may be distributed on a same VPC, or may be distributed on a plurality of VPCs. The plurality of computing devices may be any combination of computing devices such as a server, an ASIC, a PLD, a CPLD, an FPGA, and GAL.

In another embodiment, the sending module in the load balancing node may be configured to perform any step in the foregoing load balancing method. The receiving module in the load balancing node may be configured to perform any step in the foregoing load balancing method. The first determining module in the load balancing node may be configured to perform any step in the foregoing load balancing method. Steps implemented by the sending module, the receiving module, the first determining module, the second determining module, and the scheduling module in the load balancing node may be specified as required. The sending module, the receiving module, the first determining module, the second determining module, and the scheduling module in the load balancing node respectively implement different steps in the foregoing load balancing method, to implement all functions of the load balancing node.

An embodiment of this application further provides a computer-readable storage medium. The computer-readable storage medium may be any usable medium that can be stored in a computing device, or a data storage device like a data center including one or more usable media. The usable medium may be a magnetic medium (for example, a floppy disk, a hard disk, or a magnetic tape), an optical medium (for example, a DVD), a semiconductor medium (for example, a solid state drive), or the like. The computer-readable storage medium includes instructions. The instructions instruct a computing device in a computing device cluster to perform the load balancing method provided in embodiments of this application.

An embodiment of this application further provides a computer program product including instructions. The computer program product may be software or a program product that includes the instructions and that can run on a computing device or be stored in any usable medium. When the computer program product runs on a computing device included in a computing device cluster, the computing device cluster is enabled to perform the load balancing method provided in embodiments of this application.

All or a part of the foregoing embodiments may be implemented by software, hardware, firmware, or any combination thereof. When being implemented by using the software, all or the part of the foregoing embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server or a data center to another website, computer, server or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like. It should be noted that the computer-readable storage medium mentioned in this embodiment of this application may be a non-volatile storage medium, that is, may be a non-transitory storage medium.

It should be understood that "a plurality of" mentioned in this specification means two or more. In descriptions of embodiments of this application, "/" means "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, to clearly describe technical solutions in embodiments of this application, terms such as "first" and "second" are used in embodiments of this application to distinguish between same items or similar items that provide basically the same functions or purposes. Persons skilled in the art may understand that the terms such as "first" and "second" do not limit a number or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and a signal in embodiments of this application are used under authorization by the user or full authorization by all parties, and collection, use, and processing of related data need to conform to related laws, regulations, and standards of related countries and regions. For example, both the health status and the load status of the backend server in embodiments of this application are obtained under full authorization.

Finally, it should be noted that the foregoing embodiments are intended merely for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to a part of technical features thereof, without departing from the protection scope of the technical solutions of embodiments of this application.

## Claims

1. A load balancing method, applied to a load balancing node comprised in a cloud platform, wherein the load balancing node distributes service traffic to a plurality of backend servers according to a load balancing strategy, and the method comprises:
sending, by the load balancing node, a detection packet to each of the plurality of backend servers, wherein the detection packet indicates the backend server to detect a health status and a load status of the backend server;
receiving, by the load balancing node, a reply packet sent by a part or all of the plurality of backend servers, wherein the reply packet comprises a health status and a load status of a corresponding backend server;
determining, by the load balancing node, a health detection result and a load detection result of each of the plurality of backend servers based on the received reply packet, wherein the health detection result indicates whether the corresponding backend server is in an active state, and the load detection result indicates whether the corresponding backend server is overloaded;
determining, by the load balancing node based on the health detection results and the load detection results of the plurality of backend servers, at least one backend server that is in the active state and is not overloaded in the plurality of backend servers; and
scheduling, by the load balancing node, the service traffic based on a load detection result of each backend server in the at least one backend server.

2. The method according to claim 1, wherein before sending, by the load balancing node, the detection packet to each of the plurality of backend servers, the method further comprises:
generating, by the load balancing node, the detection packet using a health detection script; and
determining, by the load balancing node, the health detection result and the load detection result of each of the plurality of backend servers based on the received reply packet comprises:
parsing, by the load balancing node, the received reply packet based on the health detection script, and determining, based on a parsing result, a health detection result and a load detection result of each backend server that sends the reply packet.

3. The method according to claim 2, wherein the cloud platform further comprises a load balancing management node, and the load balancing management node is configured to manage the load balancing node comprised in the cloud platform; and
before generating, by the load balancing node, the detection packet using the health detection script, the method further comprises:
receiving, by the load balancing management node, at least one load indicator sent by a client, wherein the at least one load indicator is a measurement indicator of the load status;
generating, by the load balancing management node, the health detection script and a backend server script based on the at least one load indicator, wherein the backend server script is used to parse the detection packet and generate the reply packet; and
sending, by the load balancing management node, the health detection script to the load balancing node, and sending the backend server script to the client, to indicate the client to load the backend server script to the plurality of backend servers.

4. The method according to any one of claims 1 to 3, wherein the detection packet is an internet control message protocol ICMP packet, the ICMP packet comprises a detection type field and a load indicator field, the detection type field indicates that the ICMP packet is used to detect the health status and the load status, and the load indicator field indicates a measurement indicator of the load status.

5. The method according to claim 1, wherein scheduling, by the load balancing node, the service traffic based on the load detection result of each backend server in the at least one backend server comprises:
determining, by the load balancing node, a load weight of each backend server in the at least one backend server based on the load detection result of the at least one backend server, wherein the load weight indicates a load status of the corresponding backend server; and
scheduling, by the load balancing node, the service traffic based on the load weight of the at least one backend server.

6. The method according to claim 5, wherein scheduling, by the load balancing node, the service traffic based on the load weight of the at least one backend server comprises:
adjusting, by the load balancing node, a scheduling weight of a first-type backend server in the at least one backend server based on a load weight of the first-type backend server, to reduce a scheduling priority of the first-type backend server, wherein the first-type backend server is a backend server whose load weight is greater than or equal to a load threshold, and the scheduling weight indicates a scheduling priority of the corresponding backend server; and
scheduling, by the load balancing node, the service traffic based on a scheduling weight of a second-type backend server in the at least one backend server and an adjusted scheduling weight of the first-type backend server, wherein the second-type backend server is a backend server whose load weight is less than the load threshold.

7. The method according to claim 5, wherein scheduling, by the load balancing node, the service traffic based on the load weight of the at least one backend server comprises:
selecting, by the load balancing node, a second-type backend server from the at least one backend server based on the load weight of the at least one backend server, wherein the second-type backend server is a backend server whose load weight is less than a load threshold; and
scheduling, by the load balancing node, the service traffic based on the second-type backend server.

8. A load balancing method, applied to a backend server, wherein a load balancing node comprised in a cloud platform distributes service traffic to a plurality of backend servers according to a load balancing strategy, and the method comprises:
receiving, by the backend server, a detection packet sent by the load balancing node,
wherein the detection packet indicates the backend server to detect a health status and a load status of the backend server;
determining, by the backend server, the health status and the load status of the backend server based on the detection packet;
generating, by the backend server, a reply packet based on the health status and the load status of the backend server, wherein the reply packet comprises the health status and the load status; and
sending, by the backend server, the reply packet to the load balancing node.

9. The method according to claim 8, wherein determining, by the backend server, the health status and the load status of the backend server based on the detection packet comprises:
determining, by the backend server based on the detection packet, the health status and the load status of the backend server using a loaded backend server script; and
generating, by the backend server, the reply packet based on the health status and the load status of the backend server comprises:
generating, by the backend server based on the health status and the load status of the backend server, the reply packet using the backend server script.

10. The method according to claim 9, wherein before determining, by the backend server based on the detection packet, the health status and the load status of the backend server using the loaded backend server script, the method further comprises:
obtaining, by the backend server, the backend server script from a client and loading the backend server script.

11. A cloud platform, wherein the cloud platform comprises a load balancing node, and the load balancing node distributes service traffic to a plurality of backend servers according to a load balancing strategy;
the load balancing node is configured to send a detection packet to each of the plurality of backend servers, wherein the detection packet indicates the backend server to detect a health status and a load status of the backend server;
the load balancing node is configured to receive a reply packet sent by a part or all of the plurality of backend servers, wherein the reply packet comprises a health status and a load status of a corresponding backend server;
the load balancing node is configured to determine a health detection result and a load detection result of each of the plurality of backend servers based on the received reply packet, wherein the health detection result indicates whether the corresponding backend server is in an active state, and the load detection result indicates whether the corresponding backend server is overloaded;
the load balancing node is configured to determine, based on the health detection results and the load detection results of the plurality of backend servers, at least one backend server that is in the active state and is not overloaded in the plurality of backend servers; and
the load balancing node is configured to schedule the service traffic based on a load detection result of each backend server in the at least one backend server.

12. The cloud platform according to claim 11, wherein
the load balancing node is configured to generate the detection packet using a health detection script; and
the load balancing node is configured to: parse the received reply packet based on the health detection script, and determine, based on a parsing result, a health detection result and a load detection result of each backend server that sends the reply packet.

13. The cloud platform according to claim 12, wherein the cloud platform further comprises a load balancing management node, and the load balancing management node is configured to manage the load balancing node comprised in the cloud platform; and
the load balancing management node is configured to receive at least one load indicator sent by a client, wherein the at least one load indicator is a measurement indicator of the load status;
the load balancing management node is configured to generate the health detection script and a backend server script based on the at least one load indicator, wherein the backend server script is used to parse the detection packet and generate the reply packet; and
the load balancing management node is configured to: send the health detection script to the load balancing node, and send the backend server script to the client, to indicate the client to load the backend server script to the plurality of backend servers.

14. The cloud platform according to any one of claims 11 to 13, wherein the detection packet is an internet control message protocol ICMP packet, the ICMP packet comprises a detection type field and a load indicator field, the detection type field indicates that the ICMP packet is used to detect the health status and the load status, and the load indicator field indicates a measurement indicator of the load status.

15. The cloud platform according to claim 11, wherein
the load balancing node is configured to determine a load weight of each backend server in the at least one backend server based on the load detection result of the at least one backend server, wherein the load weight indicates a load status of the corresponding backend server; and
the load balancing node is configured to schedule the service traffic based on the load weight of the at least one backend server.

16. The cloud platform according to claim 15, wherein
the load balancing node is configured to adjust a scheduling weight of a first-type backend server in the at least one backend server based on a load weight of the first-type backend server, to reduce a scheduling priority of the first-type backend server, wherein the first-type backend server is a backend server whose load weight is greater than or equal to a load threshold, and the scheduling weight indicates a scheduling priority of the corresponding backend server; and
the load balancing node is configured to schedule the service traffic based on a scheduling weight of a second-type backend server in the at least one backend server and an adjusted scheduling weight of the first-type backend server, wherein the second-type backend server is a backend server whose load weight is less than the load threshold.

17. The cloud platform according to claim 15, wherein
the load balancing node is configured to select a second-type backend server from the at least one backend server based on the load weight of the at least one backend server, wherein the second-type backend server is a backend server whose load weight is less than a load threshold; and
the load balancing node is configured to schedule the service traffic based on the second-type backend server.

18. A backend server, wherein a load balancing node comprised in a cloud platform distributes service traffic to a plurality of backend servers according to a load balancing strategy;
the backend server is configured to receive a detection packet sent by the load balancing node, wherein the detection packet indicates the backend server to detect a health status and a load status of the backend server;
the backend server is configured to determine the health status and the load status of the backend server based on the detection packet;
the backend server is configured to generate a reply packet based on the health status and the load status of the backend server, wherein the reply packet comprises the health status and the load status; and
the backend server is configured to send the reply packet to the load balancing node.

19. The backend server according to claim 18, wherein
the backend server is configured to determine, based on the detection packet, the health status and the load status of the backend server using a loaded backend server script; and
the backend server is configured to generate, based on the health status and the load status of the backend server, the reply packet using the backend server script.

20. The backend server according to claim 19, wherein
the backend server is configured to: obtain the backend server script from a client and load the backend server script.

21. A computing device cluster, wherein the computing device cluster comprises at least one computing device, and each computing device comprises a processor and a memory; and
the processor of the at least one computing device is configured to execute instructions stored in the memory of the at least one computing device, to enable the computing device cluster to perform the method according to any one of claims 1 to 7.

22. A backend server, wherein the backend server comprises a memory and a processor, the memory is configured to store a computer program, and the processor is configured to execute the computer program stored in the memory, to implement the steps of the method according to any one of claims 8 to 10.

23. A computer-readable storage medium, wherein the storage medium comprises computer program instructions, and when the computer program instructions are executed by a computing device cluster, the computing device cluster performs the method according to any one of claims 1 to 7.

24. A computer-readable storage medium, wherein the storage medium comprises computer program instructions, and when the computer program instructions are executed by a backend server, the backend server performs the method according to any one of claims 8 to 10.

25. A computer program product comprising instructions, wherein when the instructions are run by a computing device cluster, the computing device cluster is enabled to perform the method according to any one of claims 1 to 7.

26. A computer program product comprising instructions, wherein when the instructions are run by a backend server, the backend server is enabled to perform the method according to any one of claims 8 to 10.
